# EUROPEAN PATENT SPECIFICATION

(11) **EP 4 020 006 B1**
(45) Date of publication and mention of the grant of the patent: **02.07.2025**
(21) Application number: 20306680.8
(22) Date of filing: 23.12.2020
(51) Int. Cl.: G01S 7/481, G01S 7/4863, G01S 17/894

(54) **INDIRECT TIME OF FLIGHT SENSOR**
TIME-OF-FLIGHT SENSOR
CAPTEUR DE TEMPS DE VOL INDIRECT

(43) Date of publication of application: 29.06.2022
(73) Proprietor: STMicroelectronics (Research & Development) Limited, Buckinghamshire SL7 1EY (GB); STMICROELECTRONICS (GRENOBLE 2) SAS, 38000 Grenoble (FR)
(72) Inventor: MOORE, John Kevin, EDINBURGH, EH13 0QF (GB); DUTTON, Neale, EDINBURGH, EH16 6HW (GB); MELLOT, Pascal, 38250 LANS EN VERCORS (FR)
(74) Representative: Cabinet Beaumont

(56) References cited:
- US-A1- 2014 055 771
- US-A1- 2018 156 899

## Description

### Technical field

The present disclosure relates generally to image sensors, and more particularly to time of flight sensors.

### Background art

Image sensors of the time of flight type are known. Among these sensors, indirect time of flight sensors are configurated to determine a dephasing between periodic light emitted by the sensor towards a scene to capture, and light received by pixels of the sensor, the received light corresponding to the light reflected by the scene when illuminated by the sensor. Based on the dephasing determined for each pixel of the sensor, a distance between this pixel and a conjugated point of the scene may be calculated, and a depth map of the scene may be generated. Examples of time of flight sensors are discussed in US 2018/156899 A1 and US 2014/055771 A1.

### Summary of Invention

There is a need to overcome all or some of the drawbacks of known indirect time of flight sensors.

One embodiment addresses all or some of the drawbacks of known indirect time of flight sensors.

One embodiment provides an indirect time of flight sensor comprising:
a matrix of pixels each comprising a photoconversion region and at least two sets each comprising a charges storage region and a controllable transfer device for transferring charges from the photoconversion region towards said storage region ;
first conductive lines parallel to each other, configured to transmit first control signals to the transfer devices;
a first circuit configured to provide the first signals to the first lines;
an illumination device for illuminating a scene to capture; and
a second circuit configured to control the illumination device, wherein:
   the scene is divided in first areas;
   the illumination device and the second circuit are configured to illuminate successively each first area;
   the matrix is divided in second areas each comprising adjacent lines of pixels, parallel to the first lines;
   a disposition of the matrix and of the illumination device is configured such that each first area corresponds to one of the second areas; and
   the first circuit is configured to provide different first
   signals to the different second areas such that the first signals are repeatedly commuted between active and inactive states only for the pixels of the second area of the matrix corresponding to the first area of the scene which is illuminated.

According to one embodiment, the illumination device comprises an array of laser sources and an optical device configurated to direct light emitted by the array of laser sources towards the scene, and wherein:
the array is divided in sets of laser sources, each set being configured to illuminate a corresponding first area, the second circuit being configured to control said sets one after the other; and/or
the optical device is configured to direct the emitted light differently depending on a control signal, the second circuit being configured to provide, at each illumination of a first area, said control signal corresponding to a directing of the light towards said first area.

According to one embodiment:
the sensor comprises second conductive lines parallel to the first lines and configured to receive output signals of the pixels;
each pixel comprises a selection device configured to selectively couple output(s) of said pixel to at least one corresponding second line; and
the first circuit is configured to provide second control signals to the selection devices via third conductive lines perpendicular to the second lines.

According to one embodiment, the first circuit is configured to control, by means of the second signals, a reading of all the pixels after each illumination of a first area, before an illumination of a next first area.

According to one embodiment:
the sensor comprises second conductive lines parallel to each other and perpendicular to the first lines, the second lines being configured to receive output signals of the pixels;
each pixel comprises a selection device configured to selectively couple output(s) of said pixel to at least one corresponding second line; and
the first circuit is configured to provide second control signals to the selection devices via third conductive lines perpendicular the second lines.

According to one embodiment, the second circuit is configured, before each reading of all the pixels controlled by the first circuit, to control several successive illumination cycles each comprising a unique illumination of each first area, and to control an absence of light emission by the illumination device during said reading.

According to one embodiment, the first circuit is configured to control, after each illumination of a first area, a reading of only the pixels of the second area corresponding to said first area.

According to one embodiment, the second circuit is configured to control an absence of light emission by the illumination device when the first circuit control the reading of the pixels of a second area.

According to one embodiment:
the matrix is divided in first and second halves, a limit between first and second halves being parallel to the first lines, and the second lines of each half ended at said limit;
the first circuit is configured to simultaneously control charges transfers in the pixels of a second area of one of the halves and a reading of the pixels of a second area of the other one of the halves;
a first part of a semiconductor substrate comprises the first half of the matrix and a second part of said substrate comprises the second half of the matrix;
insulation structures passing through the substrate insulate said parts of the substrate from each other; and
a reference voltage provided to the first part of the substrate is electrically decoupled from a reference voltage provided to the second part of the substrate.

According to one embodiment, for each voltage level intended to be provided to at least one pixel of the first half of the matrix, and, simultaneously, to at least one pixel of the second half of the matrix, the sensor comprises a generator of said voltage level for the first half and a generator of said voltage level for the second half, the generators being electrically decoupled from each other.

According to one embodiment, the sensor comprises a first reading circuit coupled the second lines of the first half of the matrix, and a second reading circuit coupled to the second lines of the second half of the matrix, a reference voltage of the first reading circuit being electrically decoupled from a reference voltage of the second reading circuit.

According to one embodiment, the first reading circuit is disposed along a first edge of the matrix, on the side of the first half, and the second reading circuit is disposed along a second edge of the matrix, on the side of the second half, the first and second edges being parallel.

According to one embodiment:
the substrate comprising the matrix of pixels lies on another semiconductor substrate comprising commutators, the commutators being preferably disposed below the limit between the halves of the matrix;
each commutator comprises a first input connected to one of the second lines of the first half, a second input connected to a corresponding second line of the second half, and an output configured to be selectively coupled to one of said inputs; and
the sensor comprises a reading circuit connected to the output of each commutator, the reading circuit preferably belonging to the same substrate than the commutators.

According to one embodiment:
the substrate comprising the matrix of pixels lies on another semiconductor substrate comprising commutators, the commutators being preferably disposed below the limit between the halves of the matrix;
each commutator comprises a first input connected to one of the second lines of the first half, a second input connected to a corresponding second line of the second half, and an output configured to be selectively coupled to one of said inputs;
the pixels of the matrix are arranged in column parallel to the second lines;
each commutator connected to second lines of an odd column has its output connected to a first reading circuit;
each commutator connected to second lines of an even column has its output connected to a second reading circuit; and
the first and second reading circuits preferably belonging to the same substrate than the commutators.

According to one embodiment, the sensor comprises a control circuit for controlling the commutators such that the output of each commutator is coupled to the first input of said commutator during a reading of pixels of the first half of the matrix, and to the second input of said commutator during a reading of pixels of the second half of the matrix.

### Brief description of drawings

The foregoing features and advantages, as well as others, will be described in detail in the following description of specific embodiments given by way of illustration and not limitation with reference to the accompanying drawings, in which:
Figure 1 illustrates an example of a circuit of a pixel of an indirect time of flight sensor;
Figure 2 illustrates an indirect time of flight sensor according to one embodiment;
Figure 3 illustrates an illumination device of an indirect time of flight sensor according to one embodiment;
Figure 4 illustrates an illumination device of an indirect time of flight sensor according to one alternative embodiment;
Figure 5 shows chronograms illustrating operation of the sensor of Figure 2 according to one embodiment;
Figure 6 shows chronograms illustrating operation of the sensor of Figure 2 according to one alternative embodiment;
Figure 7 illustrates an indirect time of flight sensor according to a further embodiment;
Figure 8 shows chronograms illustrating operation of the sensor of Figure 7 according to one embodiment;
Figure 9 illustrates an indirect time of flight sensor according to a further embodiment;
Figure 10 shows a very schematic top view of two adjacent pixels of the sensor of Figure 9;
Figure 11 shows a very schematic cross section view along plan AA of Figure 10;
Figure 12 shows chronograms illustrating operation of the sensor of Figure 7 according to one embodiment;
Figure 13 illustrates, in a very schematic manner, an implementation of the sensor of Figure 9;
Figure 14 illustrates, in a very schematic manner, another implementation of the sensor of Figure 9;
Figure 15 illustrates an alternative embodiment of the indirect time of flight sensor of Figure 9;
Figure 16 illustrates, in a very schematic manner, an implementation of the sensor of Figure 15;
Figure 17 illustrates another alternative embodiment of the indirect time of flight sensor of Figure 9; and
Figure 18 illustrates, in a very schematic manner, an implementation of the sensor of Figure 17.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, usual electronic systems and applications in which an indirect time of flight sensor may be provided are not described in detail, the described embodiments being compatible with these usual systems and applications.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

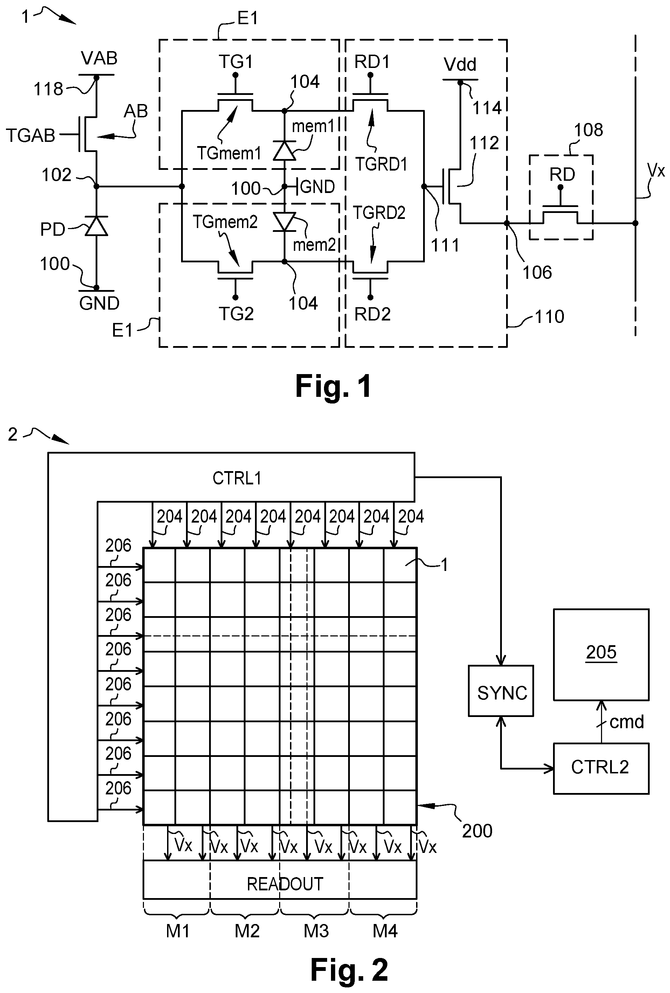

Figure 1 illustrates an example of a circuit of a pixel 1 of an indirect time of flight sensor.

Pixel 1 comprises a photoconversion region, or photosensitive region, PD, for example a photodiode, preferably a pinned photodiode. The photoconversion region PD has an electrode, for example its anode, which is connected to a node 100 configured to receive a reference voltage, for example the ground GND. The photoconversion region PD is configured such that charges are generated therein when light is received by the region PD.

Pixel 1 further comprises two identical sets E1 and E2, delimited by dashed lines in Figure 1. Each set E1, E2 is coupled to the region PD, and more particularly to the electrode 102 of the region PD which is not connected to the node 100.

Each set E1, E2 of the pixel 1 comprises a charges storage region mem1, mem2 and a controllable charge transfer device TGmem1, TGmem2.

Device TGmem1, respectively TGmem2, is connected between the region PD and the region mem1, respectively mem2. Device TGmem1, respectively TGmem2, is configured to transfer charges from the region PD to the region mem1, respectively mem2. More precisely, device TGmem1, respectively TGmem2, is configured to transfer charges from the region PD to the region mem1, respectively mem2, when its control signal TG1, respectively TG2, is active, for example at a high level, and to avoid any charge transfer between the region PD and the region mem1, respectively mem2, when this control signal is inactive, for example at a low level. Each device TGmem1, TGmem2 is, for example, a transfer gate.

Region mem1, respectively mem2, is configured to store charges which are transferred therein by the transfer device TGmem1, respectively TGmem2, until these charges are transferred elsewhere in the pixel 1 during a reading phase. Each region mem1, mem2 is, for example, a pinned diode. Each pinned diode mem1, mem2 has an electrode, for example its anode, connected to the node 100, and another electrode 104, for example its cathode, coupled to the electrode 102 of the region PD by the corresponding transfer device TGmem1, TGmem2.

Pixel 1 has an output 106. During a reading phase of the pixel 1, outputs signals of the pixel 1 are available on the output 106.

Pixel 1 comprises a selection device 108, for example a MOS ("Metal Oxide Semiconductor") transistor. The device 108 is connected between the output 106 and a reading conductive line Vx. The selection device 108 is configured to selectively couple the output 106 of the pixel 1 to the line Vx. More precisely, during a reading phase of the pixel 1, for example when a control signal RD of the device 108 is active, for example at a high level, the device 108 couples the output 106 to line Vx, and outside of a reading phase of the pixel 1, for example when signal RD is inactive, for example at a low level, the device 108 isolates output 106 from line Vx.

For example, in known time of flight sensors comprising a matrix of pixels 1 arranged in rows and columns, a line Vx is shared by all the pixels 1 which belong to the same column. To read a given pixel of the matrix, all the pixels of the row to which belongs this pixel are selected by activating signal RD for this row of pixels.

Pixel 1 comprises a controllable output circuit 110, delimited in dashed lines in Figure 1. The circuit 108 is configured to selectively generate, on the output 106, an output signal indicative of the number of charges stored in the charge storage region mem1 of the pixel or an output signal indicative of the number of charges stored in the charge storage region mem2 of the pixel.

For example, during a reading phase of the pixel, when a first signal RD1 is active, for example at a high level, the circuit 110 provides a signal, for example a voltage referenced to node 100, indicative of the number of charges stored in region mem1, and, when a second signal RD2 is active, for example at a high level, the circuit 110 provides a signal, for example a voltage referenced to node 100, indicative of the number of charges stored in region mem2.

In the particular example of Figure 1, the circuit 100 comprises, for each set E1, E2, a controllable coupling device TGRD1, TGRD2, for example a transfer gate. Device TGRD1, respectively TGRD2, is connected to the set E1, respectively E2, and, more precisely, to region mem1, respectively mem2, for example to the electrode 104 of the region mem1, respectively mem2. The device TGRD1, respectively TGRD2, is configured to couple the region mem1, respectively mem2, to a node 111 when the signal RD1, respectively RD2, is active, and to insulate the region mem1, respectively mem2, from node 111 when the signal RD1, respectively RD2, is inactive. Circuit 110 further comprises a source follower MOS transistor 112 having its gate connected to node 111, its source connected to output 106 and its drain connected to a node 114 configurated to receive a supply voltage Vdd.

The pixel 1, for example, further comprises a transistor AB connected between the electrode 102 of the region PD and a node 118 configured to receive a bias voltage VAB. The transistor AB is controlled by a signal TGAB. The transistor AB is configured, when off, to operate as an antiblooming device for the region PD, and, when on, to reset the region PD, that is to say to evacuate all the photo-generated charges accumulated in the region PD towards the node 118.

In a usual indirect time of flight sensor comprising a matrix of pixels 1 arranged in rows and columns, during an integration phase, all the transfer devices TGmem1 and TGmem2 of all the pixels 1 of the matrix are driven simultaneously to transfer charges photo-generated in the region PD of each pixel towards regions alternatively mem1 and mem2 of this pixel. Further, during the integration phase, the scene to capture is illuminated by the sensor in a flash manner, that is to say that each time the sensor emits light, the whole scene is illuminated. During the integration phase, the light is, for example, emitted under the form of a burst of successive periodic pulses of light. After an integration phase, all the pixels 1 of the matrix are read. More particularly, during the reading of all the pixels 1 of the matrix, the rows of pixels are selected the one after the other with the signals RD, and all the pixels 1 of a selected row are read simultaneously.

Although in the example of Figure 1 the pixel comprises only two identical sets E1 and E2, in other examples not illustrated, the pixel may comprise more than two identical sets, for example four identical sets.

Further, although in the example of Figure 1 the pixel 1 has only one output 106, in other examples not illustrated, the pixel may comprise more than one output 106. For example, the pixel may comprise one output 106 for each set E1, E2, the circuit 110 being then connected between the sets E1, E2 and the outputs 106. The selection device 108 is then configured to selectively couple the outputs 106 to at least one corresponding line Vx. For example, the output 106 associated to the set E1 is selectively coupled to a first line Vx by the device 108, and the output 106 associated to the set E2 is selectively coupled to a second line Vx by the device 108.

More generally, many different pixels known by those skilled in the art may be used in a matrix of pixels of an indirect time of flight sensor, and the pixel 1 of Figure 1 is only one example of these known pixels. Further, usual controls of these different pixels during an integration phase and during a reading phase are well known by those skilled in the art.

In the following description, unless indicated otherwise, when reference is made to a pixel of an indirect time of flight sensor, this means a reference to the pixel 1 of Figure 1. However, those skilled in the art will be capable of adapting the following description to other pixels, for example to pixels comprising more than two identical sets and/or more than one output 106.

It is here proposed to capture a scene with an indirect time of flight sensor by illuminate successively different areas of the scene, only one area of the scene being illuminated at a time. Said otherwise, the scene is divided in a plurality of area, and the scene is fully illuminated by successively illuminating each area of scene, each of these areas being illuminated at least once.

Figure 2 illustrates an indirect time of flight sensor 2 according to one embodiment.

The sensor 2 comprises a matrix 200 of pixels 1, only one pixel 1 being referenced on Figure 2 to avoid surcharging the drawing. Pixels 1 are arranged in rows (horizontally on Figure 2) and columns (vertically on Figure 2). In the example of Figure 2, the matrix 200 comprises 8 rows and 8 columns, although, in practice, the matrix 200 may comprise hundreds of rows and hundreds of columns.

The sensor 2 comprises a reading circuit READOUT. Circuit READOUT is configured to received output signals of the pixels of the matrix 200 which are coupled to the Vx lines when these pixels are selected. In other words, circuit READOUT is configured to received output signals of the pixels having their outputs 106 coupled to corresponding lines Vx thank to their selection devices 108 (Figure 1). As it is usual in indirect time of flight sensors, in the sensor 2, the Vx lines are arranged parallel to the columns of the matrix 200, or, said in other words, the Vx lines are vertical on Figure 2. Each Vx line is coupled, preferably connected, to the circuit READOUT. In order to avoid surcharging the Figure 2, only one Vx line is fully represented, in dashed lines, in this Figure. As it can be seen on Figure 2, each Vx line is shared by several pixels, and, more particularly, by all the pixels of a corresponding column in the embodiment of Figure 2. The reading circuit READOUT for example comprises a plurality of analog-to-digital converters (ADC), preferably one ADC for each Vx line.

The sensor 2 comprises a control circuit CTRL1. The circuit CTRL1 is configured to control reading phases and integration phases for the pixels of the matrix 200.

To provide control signals TG1 and TG2 to the transfer devices TGmem1 and TGmem2 of each pixel 1 (Figure 1), the sensor 2 comprises parallel conductive lines 204. Lines 204 are connected to circuit CTRL1. The circuit CTRL1 is configured to provide the control signals TG1 and TG2 (Figure 1) to the lines 204.

In the embodiment of Figure 2, the lines 204 are parallel to the lines Vx. Each line 204 is for example shared by all the pixels of a corresponding column of the matrix. In Figure 2, only one line 204 is fully represented, in dashed lines, in order to avoid surcharging the Figure. Further, in order to avoid surcharging the Figure, only one line 204 by column is represented in Figure 2. However, in practice, each pixel receives control signals TG1 and TG2 (Figure 1) via two corresponding lines 204, and each column is thus associated to a line 204 for transmitting signal TG1 to all the pixels of the column, and to another line 204 for transmitting signal TG2 to all these pixels.

To provide control signal RD to the selection device 108 of each pixel 1 (Figure 1), the sensor 2 further comprises parallel conductive lines 206. Lines 206 are connected to circuit CTRL1. The circuit CTRL1 is configured to provide the control signals RD to the lines 206.

In this embodiment, the lines 206 are perpendicular to the lines Vx. Each line 206 is for example shared by all the pixels of a corresponding row of the matrix. In Figure 2, only one line 206 is fully represented in dashed lines in order to avoid surcharging the Figure.

Although not shown in Figure 2, the other control signals provided to the pixels of the matrix 200 are preferably provided by the circuit CTRL1. As usual in indirect time of flight sensors, the sensor 2 comprises other conductive lines (not shown) to provide other control signals and voltages to the pixels of the matrix 200. For example, in the embodiment of Figure 2, the sensor 2 comprises:
for each row of the matrix 200, a conductive line for transmitting voltage GND (Figure 1) to all the pixels of the row;
for each column of the matrix 200, a conductive line for transmitting signal TGAB (Figure 1) to each pixel of the column;
for each column of the matrix 200, a conductive line for transmitting bias voltage VAB (Figure 1) to all the pixels of the column;
for each row of the matrix 200, a conductive line for transmitting signal RD (Figure 1) to all the pixels of the row;
for each row of the matrix 200, a conductive line for transmitting signal RD1 (Figure 1) to all the pixels of the row; and
for each row of the matrix 200, a conductive line for transmitting signal RD2 (Figure 1) to all the pixels of the row.

The sensor 2 comprises an illumination device 205. The illumination device 205 is configured to illuminate a scene to capture. The sensor 2 further comprises a control circuit CTRL2 configured to control the device 205. For example, the circuit CTRL2 provides a control signal cmd to the device 205. The signal cmd is, for example, a digital signal comprising several bits.

As indicated above, the scene to capture is divided in a plurality of areas, and it is here proposed to successively illuminate each area of the scene, by illuminating only one area at a time, being understood that, in practice, parts of the scene which are adjacent to the illuminated area may also receive some light. Said in other words, the device 205 and its control circuit CTRL2 are configured to successively illuminate each area of the scene. For example, the device 205 is configured to illuminate different areas of the scene to capture, the area which is illuminated by the device 205 being determined by the signal cmd.

Control circuits CTRL1 and CTRL2 are synchronized, for example by means of a synchronization circuit SYNC which couples circuits CTRL1 and CTRL2. Said in other words, circuit SYNC receives and/or sends synchronization signals to and/or from circuits CTRL1 and CTRL2.

In a similar manner to the scene, the matrix 200 is divided in a plurality of areas, the total number of areas of the matrix being, preferably, equal to the total number of areas of the scene. In the example of Figure 2, the matrix 200 is divided in four areas M1, M2, M3 and M4.

Each area M1, M2, M3, M4 comprises adjacent lines of pixels 1, these lines of pixels being parallel to the conductive lines 204. In the embodiment of Figure 2, each area M1, M2, M3, M4 comprises two adjacent lines of pixels 1 which are parallel to the lines 204, or, said in other words, each area M1, M2, M3, M4 comprises two adjacent columns of pixels 1.

The matrix 200 and the device 205 are disposed relative to each other such that each area M1, M2, M3, M4 of the matrix 200 corresponds to an area of the scene, taken among the areas the scene is divided in and which are successively illuminated. Said in other words, the matrix 200 and the device 205 are disposed relative to each other such that, each time an area of the scene, taken among the plurality of areas the scene is divided in, is illuminated by the device 205, the light reflected by this area of the scene is received by the pixels 1 of the corresponding area M1, M2, M3 or M4 of the matrix 200, being understood that, in practice, some other pixels of the matrix, which are disposed near this corresponding area M1, M2, M3 of M4, may also receive part of the light reflected by the scene. The implementation of this disposition of the matrix 200 and the device 205 relative to each other is in the abilities of those skilled in the art.

The sensor 2 allows a scanned illumination of the scene to capture. For a given power supply provided to device 205 during an illumination of an area of the scene, all the light generated by the device 205 is directed towards this area of the scene. This differs from usual indirect time of flight sensors in which this given power supply is used to provide a flash illumination of the whole scene to capture. As a result, the signal-to-noise ratio of the light received by the sensor 2 is increased compared to that of the light received by these usual sensors. Indeed, for a given power supply, with a flash illumination, the light received by each area of scene carries less optical power than the light received by the only area of the scene which is illuminated by the sensor 2 during a scanned illumination.

The circuit CTRL1 is further configured to provide different control signals TG1 and TG2 to the different areas M1, M2, M3 and M4 of the matrix 200. Said in other words, the circuit CTRL1 is configured to control the charge transfers independently in each area M1, M2, M3, M4 of the matrix 200, or, said differently, independently between the areas M1, M2, M3 and M4. For example, circuit CTRL1 comprises a different sub-circuit (not shown on Figure 2) for each area M1, M2, M3, M4 of the matrix, each sub-circuit being configured to provide control signals for charge transfer in the pixels of the area M1, M2, M3 or M4 this sub-circuit is associated with.

For example, the circuit CTRL1 is configured to control an integration phase for the pixels of any one of the areas M1, M2, M3 and M4, while the circuit CTRL1 controls no integration phase for the pixels of the other areas. More particularly, when an area of the scene is illuminated by the device 205, and the light reflected by this area of the scene is received by the corresponding area M1, M2, M3 or M4 of the matrix 200, control signals TG1, TG2 are maintained, by circuit CTRL1, at the inactive state for the other areas of the matrix 200. The control signals TG1, TG2 are repeatedly commuted between active and inactive states only for the pixels 1 of the area M1, M2, M3 or M4 which is receiving light. Said in other words, control signals TG1, TG2 are repeatedly commuted between active and inactive states only for the pixels 1 of the area of the matrix 200 corresponding to the area of the scene which is illuminated, such that in each pixel of said area of the matrix 200, charges are alternatively transferred, from the region PD, to each storage regions mem1, mem2 of the pixel.

In practice, each commutation of the signal TG1, respectively TG2, corresponds to a charge or a discharge of a capacitance, typically the gate capacitance of the charge transfer device TGmem1, respectively TGmem2. Thus, by reducing the number of pixels for which signals TG1 and TG2 simultaneously commute, a power consumption of the sensor 2 is reduced compared to that of a usual indirect time of flight sensor, in which signals TG1, respectively TG2, commute simultaneously in all the pixels of the sensor.

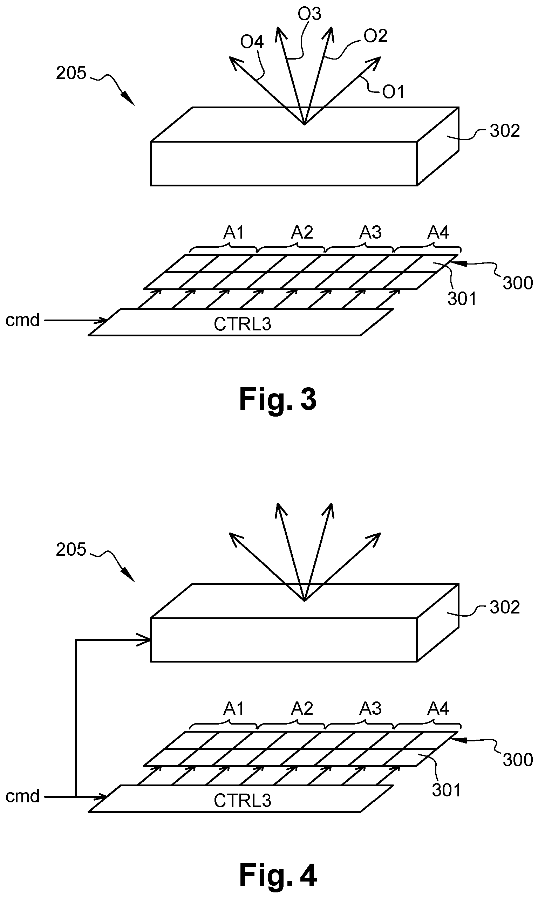

Figure 3 illustrates, in a very schematic manner, the illumination device 205 according to one embodiment.

The illumination device 205 comprises an array 300 of laser sources 301, only one laser source being referenced in Figure 3 in order to avoid surcharging the Figure. Each laser source 301 is, preferably, a VCSEL ("Vertical-Cavity Surface-Emitting Laser"). In the example of Figure 3, the array 300 comprises 8X2 laser sources 301, although the number of light sources 301 of the array can be different in other examples.

Device 205 further comprises an optical device 302, represented in the form of a block in Figure 3. Optical device 302 is configurated to direct, or orientate, the light emitted by the array 300 of laser sources 301 towards the scene to capture.

In this embodiment, the array 300 is divided in a plurality of sets of laser sources. In the example of Figure 3, the array 300 is divided into four sets A1, A2, A3 and A4 of laser sources 301. Preferably, the number of sets of the array 300 is equal to the number of areas of the scene, and to the number of areas M1, M2, M3, M4 of the matrix 200 (Figure 2).

Each set A1, A2, A3, A4 is configured to illuminate a corresponding area of the scene to capture. Indeed, the laser sources 301 of the array can be each controlled independently from the other laser sources 301. For example, the array 300 is controlled such that, when laser sources 301 of a given sets A1, A2, A3 or A4 of the array 300 is emitting light, the laser sources 301 of the other sets are emitting no light. For example, the laser sources 301 which are emitting light and those which are emitting no light are determined by the signal cmd.

The circuit CTRL2 (Figure 2) is configured to control, with the signal cmd, an emission of light by sets A1, A2, A3 and A4 the one after the other. More precisely, the set A1, A2, A3 or A4 which emits light depends on the value of the signal cmd.

For each set A1, A2, A3, A4, when the laser sources 301 of the set are emitting light, the emitted light is directed towards a corresponding area of the scene to capture by the device 302, the illuminated area of the scene being different for each set A1, A2, A3, A4 of the array 300 of laser sources 301.

For example, in Figure 3, the optical device 302, for example a lens or an objective, is configured to direct the light emitted by the laser sources 301 of the respective set A1, A2, A3 or A4 in a respective direction O1, O2, O3 or O4. Thus, when set A1 (respectively A2, A3 or A4) emits light, a first (respectively a second, a third or a fourth) area of the scene is illuminated and reflected light is received by the area M1 (respectively M2, M3 or M4) of the matrix 200 (Figure 2).

For example, the device 205 comprises a control circuit CTRL3 configured to control the emission of light by each light source 301 of the array 300 based on signal cmd.

In the device 205 of Figure 3, a given power supply provided to the array 300 is shared, or split, between those of the light sources 301 which are emitting light. Thus, for a given power supply provided to the array 300, the optical power of the light received by an area of the scene is greater when only the light sources of the set A1, A2, A3 or A4 corresponding to this area are emitting light (scanned illumination), than when all the light sources 301 are emitting light simultaneously (flash illumination).

Figure 4 illustrates the illumination device 205 according to one alternative embodiment.

The device 205 of Figure 4 comprises, as the one of Figure 3, the array 300 of laser sources 301, and the optical device 302.

However, in the embodiment of Figure 4, the array 300 is not divided in a plurality of sets of light independently controllable. For example, depending on the signal cmd, all the light sources 301 emit light, or do not emit any light. For example, the device 205 comprises the control circuit CTRL3 configured to control the emission of light by all light sources 301 of the array 300 based on signal cmd.

Further, in the embodiment of Figure 4, the optical device 302 is controllable. More precisely, the direction in which the light emitted by the array 300 is directed by the device 302 is controllable. Said in other words, the device 302 is configured to direct the emitted light differently depending on signal cmd. The control circuit CTRL2 (Figure 2), which provides the control signal cmd to the device 205, is configured to provide, at each illumination of an area of the scene to capture, the control signal cmd which corresponds to a directing of the light, by the device 302, towards this area of the scene.

For example, in Figure 4, the optical device 302 is configured to direct the light emitted by the array of laser sources 301 in four different directions O1, O2, O3 or O4, each corresponding to a different area of the scene. Thus, when signal cmd is at a first (respectively a second, a third or a fourth) value, a first (respectively a second, a third or a fourth) area of the scene is illuminated and reflected light is received by the area M1 (respectively M2, M3 or M4) of the matrix 200 (Figure 2).

The device 302 for example comprises mirror(s) and/or one or several lens, the orientation of which being controllable by the signal cmd. Preferably, the optical device 302 comprises at least one controllable movable micro-mirror, or, in other words, a MEMs (Microelectromechanical systems) controllable movable micro-mirror. The implementation of the optical device 302 is in the abilities of those skilled in the art.

In the device 205 of Figure 4, a given power supply which is provided to the array 300 during an illumination phase is shared between all the light sources 301. However, all the light emitted by the array 300 is concentrated towards a given area of the scene by the optical device 302. This differs from a flash illumination for which the light emitted by the array 300 is directed, or spread, towards the whole scene to capture. Thus, for a given power supply provided to the array 300, a scanned illumination of the scene allows to improve the optical power of the light successively received by each area of the scene, compared to that of the light received simultaneously by all the areas of the scene during a flash illumination.

The embodiments of Figure 3 and 4 may be combined. Further, the described embodiments of indirect time of flight sensors are not limited to the embodiments of the device 205 described in relation with Figures 3 and **4****.** Those skilled in the art are capable of using other illumination devices which are controllable, such that the emitted light is directed only towards an area of the scene to capture, selected in a controllable manner among a plurality of areas of the scene.

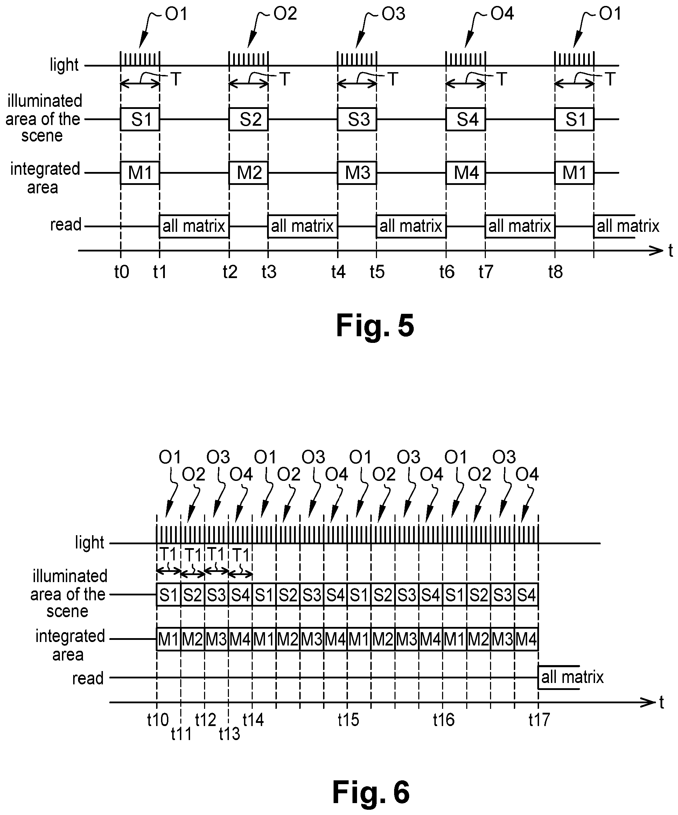

Figure 5 shows chronograms illustrating operation of the sensor of Figure 2 according to one embodiment. More specifically, in this example the scene to capture is divided in four area S1, S2, S3 and S4, and the Figure 5 shows, depending on time t, the light ("light") emitted by the illumination device 205 (Figure 2), which area S1, S2, S3 or S4 receives the light ("illuminated area of the scene"), which corresponding area M1, M2, M3 or M4 of the matrix 200 (Figure 2) receives the reflected light and has its pixels in an integration phase ("integrated area"), and which pixels of the matrix are read ("read"). In this example, the device 205 emits light under the form of a burst of periodic pulses of light.

Between an instant t0 and an instant t1 posterior to instant t0, device 205 emits light with the direction O1, towards the area S1 of the scene. The light reflected by this area S1 is received by the corresponding area M1 of the matrix. An integration phase of the received light is done in the pixels of the area M1 only, by commutating the control signals TG1, TG2 of the charge transfer devices TGmem1, TGmem2 of these pixels between their active and inactive states, at a frequency upper than that of the emitted light.

Between the instant t1 and an instant t2 posterior to instant t1, no light is emitted by the device 205 and the pixels of the area M1 are read. Because the lines 204 are parallel to the lines Vx (Figure 2), the reading of the pixels of the area M1 implies that all the pixels of the matrix are read ("all matrix"). Thus, between instants t1 and t3, the circuit CTRL1 is configured to control, by means of signals RD, a reading of all the pixels of the matrix 200, by reading the rows of the matrix ones after the other.

Between the instant t2 and an instant t3 posterior to instant t2, device 205 emits light with the direction O2, towards the area S2 of the scene. The light reflected by the area S2 is received by the corresponding area M2 of the matrix, and an integration phase is performed in the pixels of the area M2 only.

Between the instant t3 and an instant t4 posterior to instant t3, no light is emitted by the device 205 and the pixels of the area M2 are read, by reading all the pixels of the matrix ("all matrix"), similarly to what has been done between instants t1 and t2.

Between the instant t4 and an instant t5 posterior to instant t4, device 205 emits light with the direction O3, towards the area S3 of the scene. The light reflected by the area S3 is received by the corresponding area M3 of the matrix, and an integration phase is performed in the area M3 only.

Between the instant t5 and an instant t6 posterior to instant t5, no light is emitted by the device 205 and the pixels of the area M3 are read, by reading all the pixels of the matrix ("all matrix").

Between the instant t6 and an instant t7 posterior to instant t6, device 205 emits light with the direction O4, towards the area S4 of the scene. The light reflected by the area S4 is received by the corresponding area A4 of the matrix, and an integration phase is performed in the area M4 only.

At the instant t7, all the areas S1, S2, S3, S4 of the scene has been illuminated once during the scanned illumination of the scene.

Between the instant t7 and an instant t8 posterior to instant t7, no light is emitted by the device 205 and the pixels of the area M4 are read, by reading all the pixels of the matrix ("all matrix").

At the instant t8, the outputs signals of the pixels of the area M1 read after the illumination of the area M1 (between instants t1 and t2), the outputs signals of the pixels of the area M2 read after the illumination of the area M2 (between instants t3 and t4), the outputs signals of the pixels of the area M3 read after the illumination of the area M3 (between instants t5 and t6), and the outputs signals of the pixels of the area M4 read after the illumination of the area M4 (between instants t7 and t8) may be used to generate, or compute, an image, or depth map, of scene.

At the instant t8, a new scanned illumination of the scene begins, by illuminating, with the device 205, the area M1 of the scene.

In the operating mode described in relation with Figure 5, after each illumination of an area S1, S2, S3 or S4 of the matrix 200, all the pixels of the matrix are read to get the output signals of the pixels of the area M1, M2, M3 or M4 of the matrix 200 corresponding to the illuminated area. More precisely, after each illumination of an area S1, S2, S3 or S4, all the pixels of the matrix are read before the next area S1, S2, S3 or S4 is illuminated.

Preferably, when capturing a scene, during the successive illuminations of the areas of the scene, the device 205 is supplied with an average power supply having a given peak power, which is equal to an average power, having the same peak power, provided to an illumination device of a usual sensor during a flash illumination of the scene. In this case, the duration T of the illumination phase of each area of the scene during a scanned illumination is preferably equal to the duration of the flash illumination divided by the number of areas of the scene. This allows to further increase, the signal-to-noise ratio in the sensor 2 compared to a usual sensor, without modifying the power supply used to illuminate the scene to capture.

Figure 6 shows chronograms illustrating operation of the sensor of Figure 2 according to one alternative embodiment. In this example the scene to capture is divided in four area S1, S2, S3 and S4, and the Figure 6 shows, depending on time t, the light ("light") emitted by the illumination device 205, which area S1, S2, S3 or S4 receives the light ("illuminated area of the scene"), which corresponding area M1, M2, M3 or M4 of the matrix 200 receives the reflected light and has its pixels in an integration phase ("integrated area"), and which pixels of the matrix are read. In this example, the device 205 emits light under the form of a burst of periodic pulses of light.

Between an instant t10 and an instant t11 posterior to instant t10, device 205 emits light with the direction O1, towards the area S1 of the scene. The light reflected by this area S1 is received by the corresponding area M1 of the matrix. An integration phase of the received light is done in the pixels of the area M1 only, by commutating the control signals TG1, TG2 of the charge transfer devices TGmem1, TGmem2 of these pixels between their active and inactive states, at a frequency upper than that of the emitted light.

Between the instant t11 and an instant t12 posterior to instant t11, device 205 emits light with the direction O2, towards the area S2 of the scene. The light reflected by the area S2 is received by the corresponding area M2 of the matrix, and an integration phase is performed in the pixels of the area M2 only.

Between the instant t12 and an instant t13 posterior to instant t12, device 205 emits light with the direction O3, towards the area S3 of the scene. The light reflected by the area S3 is received by the corresponding area M3 of the matrix, and an integration phase is performed in the pixels of the area M3 only.

Between the instant t13 and an instant t14 posterior to instant t13, device 205 emits light with the direction O4, towards the area S4 of the scene. The light reflected by the area S4 is received by the corresponding area M3 of the matrix, and an integration phase is performed in the pixels of the area M4 only.

As illustrated in Figure 6, a cycle of successive illuminations of the areas S1, S2, S3 and S4, in which each area S1, S2, S3, S4 is illuminated once, may be then repeated several times before a reading of all the pixels of the matrix ("all matrix"). In the example of Figure 6, before the reading, the cycle of successive illuminations of the area S1, S2, S3 and S4 is performed four times, once between the instants t10 and t14, once between the instant t14 and an instant t15 posterior to instant t14, once between the instant t15 and an instant t16 posterior to instant t15, and once between the instant t16 and an instant t17 posterior to instant t16.

At the instant t17, the circuit CTRL1 (Figure 2) controls, by means of signals RD, a reading of all the pixels of the matrix ("all matrix"), by reading the rows of the matrix ones after the other. No light is emitted during this reading phase. At the end of the reading phase, a depth map of the scene can be generated, or computed, based on the outputs signals of the pixels read during the reading phase.

In the operation described in relation with Figure 6, before each reading of all the pixels, the reading being controlled by the circuit CTRL1, the circuit CTRL2 is configured to control several successive illumination cycles, each comprising a unique illumination of each area S1, S2, S3 and S4. The circuit CTRL1 is further configured to control an absence of emission of light by the illumination device 205 during the reading.

Compared to the operation described in relation with Figure 5 to capture a full scene, only one reading of all the pixels of the matrix is performed in the operation described in relation Figure 6, which results in a decrease of the time needed to capture the scene.

Preferably, in Figure 6, the duration T1 of each illumination phase of each area S1, S2, S3 and S4 is equal to the duration T of the illumination phase of each area S1, S2, S3 and S4 described in relation with Figure 5, divided by the number of times the illumination cycle of the areas S1, S2, S3 and S4 is repeated before a full reading of the matrix. Said in other words, in this example, the illumination duration T1 is equal to a quarter of the illumination duration T (Figure 5). As a result, the power supply provided to device 205 for capturing the scene is the same in the operation mode of Figure 6 and in the operation mode of Figure 5. Further, in case the device 205 is implemented as described in relation with Figure 3, the operation described in relation with Figure 6 allows to mitigate the temperature elevation in the array 300 of the device 205, compared to the operation described in relation with Figure 5.

In the embodiments described in relation with Figures 2 to 6, the lines 204 for providing the control signals TG1, TG2 to the transfer devices TGmem1, TGmem2 of the pixels are parallel to the lines Vx. Other embodiments will be described below, in which lines 204 are perpendicular to the lines Vx.

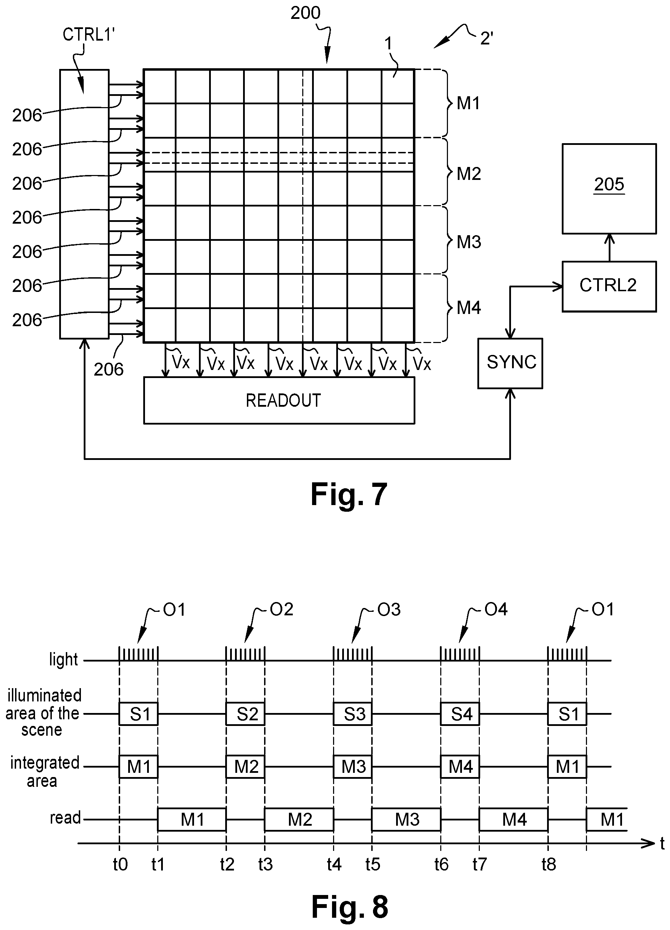

Figure 7 illustrates an indirect time of flight sensor 2' according to a further embodiment, in which lines 204 are perpendicular to lines Vx.

The sensor 2' comprises, as the sensor 2 (Figure 2), the matrix 200 of pixels 1, the circuit READOUT, the lines Vx coupled to the circuit READOUT, the lines 206, and the illumination device 205 and its control circuit CTRL2, which will not be described again.

Instead of the circuit CTRL1, the sensor 2' comprises a control circuit CTRL1'. The circuit CTRL1' is configured to control reading phases and integration phases for the pixels of the matrix 200. The circuit CTRL1' is configured to provide the control signals TG1 and TG2 (Figure 1) to the lines 204. The circuit CTRL1' is further configured to provide the control signals RD to the lines 206.

In the embodiment of Figure 7, the lines 204, which are each connected to circuit CTRL1', are perpendicular to the lines Vx. Each line 204 is shared by all the pixels of a corresponding row of the matrix. In figure 7, only one line 204 is fully represented in dashed lines, in order to avoid surcharging the Figure. Further, in order to avoid surcharging the Figure, only one line 204 by row is represented in Figure 7. However, in practice, each pixel receives control signals TG1 and TG2 (Figure 1) via two corresponding lines 204, and each row is thus associated to a line 204 for transmitting signal TG1 to all the pixels of the row, and to another line 204 for transmitting signal TG2 to all these pixels.

Although not shown on Figure 7, the other control signal provided to the pixels of the matrix 200 are preferably provided by the circuit CTRL1'. Further, similarly to what has been described for the sensor 2 of Figure 2, the sensor 2' comprises other conductive lines (not shown) to provide other control signals and voltages to the pixels of the matrix 200. For example, in the embodiment of Figure 7, the sensor 2' comprises:
for each row of the matrix 200, a conductive line for transmitting, or providing, control signal TGAB (Figure 1) to all the pixels of the row;
for each row of the matrix 200, a conductive line for transmitting bias voltage VAB (Figure 1) to all the pixels of the row;
for each row of the matrix 200, a conductive line for transmitting voltage GND (Figure 1) to all the pixels of the row;
for each row of the matrix 200, a conductive line for transmitting signal RD (Figure 1) to each pixel of the row;
for each row of the matrix 200, a conductive line for transmitting signal RD1 (Figure 1) to all the pixels of the row; and
for each row of the matrix 200, a conductive line for transmitting signal RD2 (Figure 1) to all the pixels of the row.

Control circuits CTRL1' and CTRL2 are synchronized, for example by means of a synchronization circuit SYNC which couples circuits CTRL1' and CTRL2. Said in other words, circuit SYNC receives and/or sends synchronization signals to and/or from circuits CTRL1' and CTRL2.

As for sensor 2, the matrix 200 of sensor 2' is divided in a plurality of areas, the total number of areas of the matrix being, preferably, equal to the total number of areas of the scene. In the example of Figure 7, the matrix 200 is divided in four areas M1, M2, M3 and M4.

Each area M1, M2, M3, M4 comprises adjacent lines of pixels 1, these lines of pixels being parallel to the conductive lines 204. In the embodiment of Figure 7, each area M1, M2, M3, M4 comprises two adjacent lines of pixels 1 which are parallel to the lines 204, or, said in other words, each area M1, M2, M3, M4 comprises two adjacent rows of pixels 1.

As already described for the sensor 2, in the sensor 2' the matrix 200 and the device 205 are disposed relative to each other such that each area M1, M2, M3, M4 of the matrix 200 corresponds to an area of the scene.

The sensor 2' allows, as the sensor 2 of Figure 2, a scanned illumination of the scene to capture. As a result, the signal-to-noise ratio of the light received by the sensor 2' is increased compared to that of the light received by the usual sensors.

The circuit CTRL1' is configured to provide different control signals TG1 and TG2 to the different areas M1, M2, M3 and M4 of the matrix 200. Said in other words, the circuit CTRL1' is configured to control the charge transfers independently in each area M1, M2, M3, M4 of the matrix 200. For example, circuit CTRL1' comprises a different sub-circuit (not shown on Figure 7) for each area M1, M2, M3, M4 of the matrix, each sub-circuit being configured to provide control signals for charge transfer in the pixels of the area M1, M2, M3 or M4 this sub-circuit is associated with.

For example, the circuit CTRL1' is configured to control an integration phase for the pixels of any one of the areas M1, M2, M3 and M4, while the circuit CTRL1' controls no integration phase for the pixels of the other areas. More particularly, when an area of the scene is illuminated by the device 205, and the light reflected by this area of the scene is received by the corresponding area M1, M2, M3 or M4 of the matrix 200, control signals TG1, TG2 are maintained, by circuit CTRL1', at the inactive state for the other areas of the matrix 200. The control signals TG1, TG2 are repeatedly commuted between active and inactive states only for the pixels 1 of the area M1, M2, M3 or M4 which is receiving light. Said in other words, control signals TG1, TG2 are repeatedly commuted between active and inactive states only for the pixels 1 of the area of the matrix 200 corresponding to the area of the scene which is illuminated, such that in each pixel of said area of the matrix 200, charges are alternatively transferred, from the region PD, to each storage regions mem1, mem2 of the pixel. As a result, a power consumption of the sensor 2' is reduced compared to that of a usual indirect time of flight sensor.

An advantage of the sensor 2' compared to the sensor 2 is that the pixels of a given area M1, M2, M3 or M4 of the matrix 200 of sensor 2' may be read without performed a full reading of the matrix 200, by reading ones after the other only the rows of this area.

Figure 8 shows chronograms illustrating operation of the sensor 2' of Figure 7 according to one embodiment. More specifically, in this example the scene to capture is divided in four area S1, S2, S3 and S4, and the Figure 8 shows, depending on time t, the light ("light") emitted by the illumination device 205 (Figure 7), which area S1, S2, S3 or S4 receives the light ("illuminated area of the scene"), which corresponding area M1, M2, M3 or M4 of the matrix 200 (Figure 7) receives the reflected light and has its pixels in an integration phase ("integrated area"), and which pixels of the matrix are read ("read"). In this example, the device 205 emits light under the form of a burst of periodic pulses of light.

The chronograms of Figure 8 are identical to those of Figure 5, except for the reading phase. Indeed, in the operation of Figure 8, each illumination of an area S1, S2, S3 or S4 of the scene is followed by a reading of the pixels of only the area M1, M2, M3 or M4 of the matrix which corresponds to this area of the scene. Said in other words the circuit CTRL1' is configured to control, after each illumination of an area S1, S2, S3 or S4, a reading of only the pixels of the area M1, M2, M3 or M4 corresponding to this area S1, S2, S3 or S4, before an illumination of a next area of the scene. During the reading of the pixels of a given area M1, M2, M3 or M4 of the matrix, the circuit CTRL2 is configured to control an absence of light emission by the device 205.

More specifically, in the Figure 8:
- the pixels of the area M1 only are read between the instants t1 and t2,
- the pixels of the area M2 only are read between the instants t3 and t4,
- the pixels of the area M3 only are read between the instants t5 and t6, and
- the pixels of the area M4 only are read between the instants t7 and t8.

In the sensor 2', the duration of the reading of the pixels of a given area of the matrix is reduced compared to that of the sensor 2, because it is not anymore needed to read the all the pixels of the matrix to read the pixels of a given area of the matrix.

In an alternative embodiment, the sensor 2' operates as described in relation with Figure 6. In such alternative embodiment, the circuit CTRL2 is configured, before each reading of all the pixels, which is controlled by the circuit CTRL1', to control several successive illumination cycles each comprising a unique illumination of each area S1, S2, S3 and S4 of the scene. The circuit CTRL2 is further configured to control an absence of light emission by the illumination device 205 during the reading of the matrix.

To take profit of the fact that lines 204 are perpendicular to lines Vx, it is here proposed to read the pixels of an area M1, M2, M3 or M4 of the matrix 200 whereas another area of the matrix 200 is receiving light. However, when pixels of a given area M1, M2, M3 or M4 receiving light are in an integration phase and when pixels of another area are simultaneously in a reading phase, it has been shown that the high frequency commutations of the signals transmitted using lines 204 to the pixels of in the integration phase generate noise in the outputs signals of the pixels in the reading phase, the outputs signals being available on the Vx lines. This noise is for example transmitted via the reference voltage GND which is provided to the different circuits and to all the pixels of the sensor, and/or by the cross coupling between lines Vx and lines 204.

To suppress this noise, it is here proposed a split ground and bias strategy to minimise unwanted coupling. More specifically, the pixels matrix is split into two insulated halves. Further, separated, or electrically decoupled, supply voltage, reference voltage, bias voltages and control signals are provided to each matrix half. It is then possible to read pixels of one half of the matrix while pixels of the other half are integrating, without generating noise. Different embodiments of indirect time of flight sensors implementing this strategy will be now described.

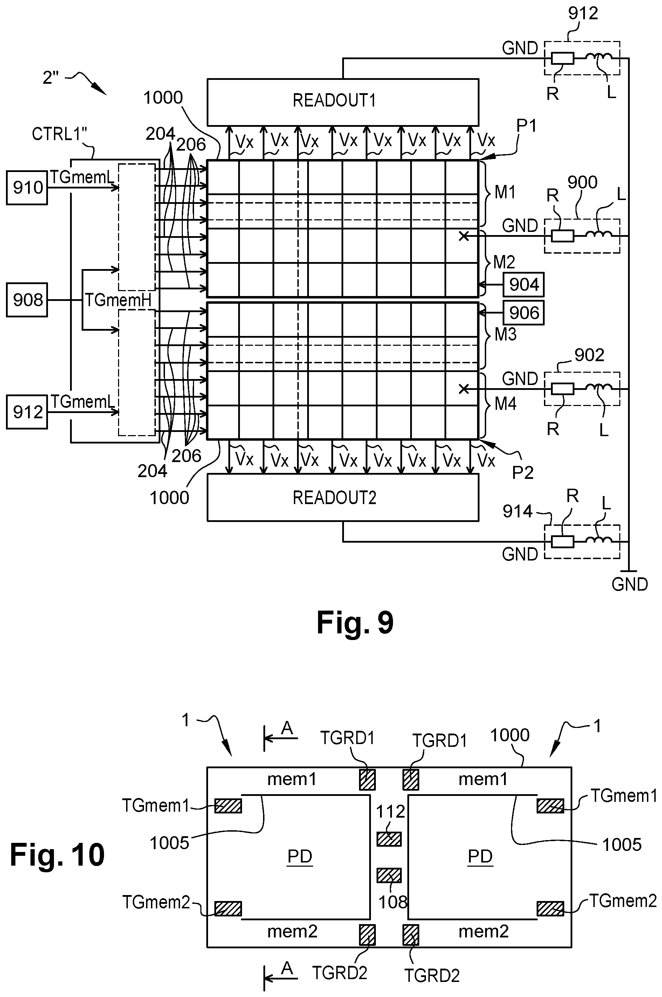

Figure 9 illustrates an indirect time of flight sensor 2'' according to a further embodiment. The sensor 2'' is similar to the sensor 2' of Figure 7, and only the difference between these two sensors will be described in detail. In Figure 9, the illumination device 205 and its control circuit CTRL2 are not shown.

In sensor 2'', the matrix 200 is split into two halves P1 and P2. More specifically, a limit between parts P1 and P2 of the matrix 200 is parallel to the lines 204.

The parts P1 and P2 of the matrix 200 are adjacent, the part P1 being disposed along the part P2. More specifically, each column comprises a first portion, or half, belonging to part P1, and a second portion, or half, belonging to part P2 and being aligned with the first portion of the column. For example, the parts P1 and P2 have a common edge, which corresponds to the limit between parts P1 and P2.

Further, the lines Vx, which are parallel to the column of the matrix and perpendicular to lines 204, are interrupted at the limit between parts P1 and P2 of the matrix 200. Said in other words, the lines Vx of the part P1 of the matrix 200 and the lines Vx of the part P2 of the matrix end at the limit between parts P1 and P2 of the matrix 200. Said differently, the lines Vx of part P1 of the matrix are insulated from the lines Vx of part P2 of the matrix, and the lines Vx of part P1, respectively P2, do not extend above or below the part P2, respectively P1. In Figure 9, in order to not surcharging the Figure, only one line Vx of the part P1 is represented in dashed line, and only one corresponding line Vx of the part P2 is represented in dashed line.

A line Vx of the part P2 corresponds to a line Vx of the part P1 when these two lines Vx belong to the same column of the matrix 200. For example, in each column of the matrix 200, a line Vx of the part P2 corresponds to a line Vx of the part P1 when the line Vx of the part P1 is selectively coupled to given outputs of the pixels of the part P1 disposed in this column, and the line Vx is selectively coupled to the corresponding outputs of the pixels of the part P2 disposed in this column.

The part P1 of the matrix 200 is electrically decoupled from the part P2 of the matrix 200. More specifically, a semiconductor substrate to which the pixels 1 of the matrix 200 belong has a first part which comprises the part P1 of the matrix 200 and a second part which comprises the part P2 of the matrix 200. Said in other words, the first part of the substrate comprises the half P1 of the matrix and a second part of the substrate comprises the half P2 of the matrix.

The first and second parts of the substrate are insulated from each other using insulation structures passing through the substrate, the insulation structures being preferably insulation structures provided between pixels to insulate the pixels from each other.

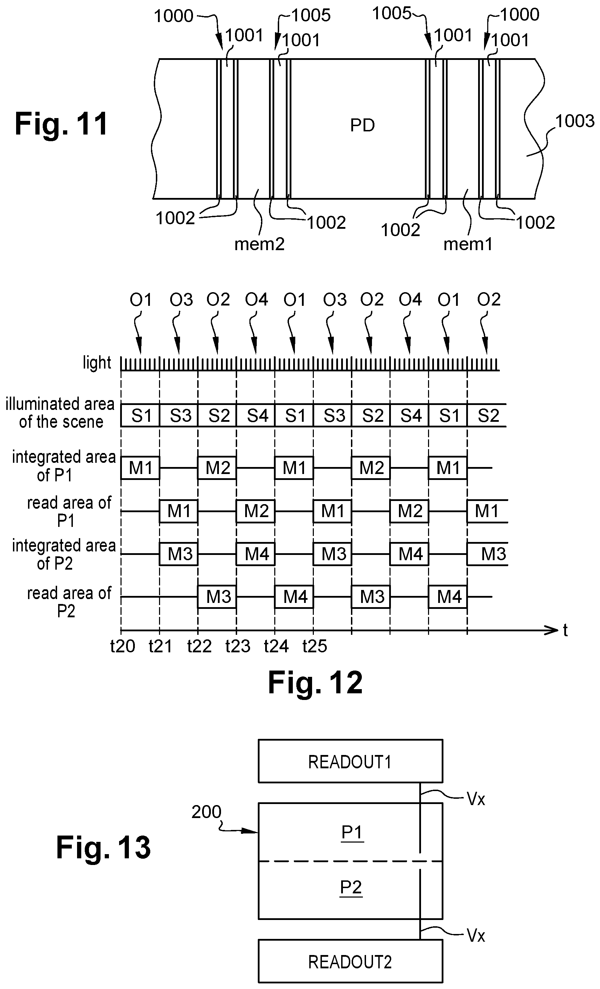

Figure 10 shows a very schematic top view of two adjacent pixels 1 of the sensor of Figure 9, according to an example. Figure 11 shows a very schematic cross section view along plan AA of Figure 10. In this example, the two adjacent pixels 1 belong to the same column of the matrix, but to two different adjacent rows. The pixels 1 are disposed in and on a semiconductor substrate 1003.

In the example of Figures 10 and 11, the two adjacent pixels are laterally delimited, or surrounded, by an insulation structure 1000, which is schematically represented by a simple line in Figure 10. The insulation structure 1000 passes through the substrate 1003. As it can be seen in more detail in Figure 11, the insulation structure 1000 is preferably a capacitive deep trench insulation (CDTI), that is to say a trench filled with a conductive material 1001, insulated from the semiconductor substrate 1003 by an insulative layer 1002. Preferably, the conductive material is a metal, for example tungsten or aluminium, or a metal alloy. Indeed, the use of a metal or metal alloy allows to reduce the optical cross-talk.

In this example, the region PD of each pixel 1 is laterally delimited by a capacitive deep trench insulation 1005, for example a U-shaped insulation structure 1005 in the view of Figure 10. The storage region mem1 and mem2 of each pixel 1 are defined, or delimited, by a portion of the structure 1000 and a portion of the structure 1005 which is opposite and parallel to this portion of the structure 1000. Said in other words, each storage region mem1, mem2 is laterally delimited, in a direction perpendicular to its length, by two parallel portions of the respective structures 1000 and 1005.

In this example, each pixel 1 further comprises transfer devices TGmem1 and TGmem2, the coupling devices TGRD1 and TGRD2, the transistor 112 and the selection device 108, the transistors 112 and 108 being shared by the two adjacent pixels.

The example shown in Figures 10 and 11 is not limitative. For example, the pixels of the matrix 200 can be arranged by groups of four pixels, the pixels of each group sharing the same transistors 112 and 108. In another example, each pixel of matrix 200 has its own transistors 112 and 108. Further, the storage region mem1 and mem2 of each pixel may be delimited by CDTI which are not portion of the insulation structure 1000 which laterally delimitate the pixel.

Further, although in the example of Figures 10 and 11, the insulation structure 1000 is of the CDTI type, in other example, this insulation structure may be a deep trench insulation (DTI), that is to say a trench filled with an insulating material, the DTI passing through the substrate.

Referring back to the Figure 9, for example, the set of all the pixels 1 of the part P1 of the matrix are surrounded by an insulation structure 1000, which delimits the first part of the substrate, and the set of all the pixels of the part P2 of the matrix are surrounded by another insulation structure 1000, which delimits the second part of the substrate.

The reference voltage GND which is provided to the first part of the substrate and the reference voltage GND which is provided to the second part of the substrate are electrically decoupled from each other. For example, the reference voltage GND provided to the first part of the substrate, or, in other words, to each pixel of the part P1 of the matrix, is provided by a first bonding pad 900 of the sensor 2'', and the other reference voltage GND provided to the second part of the substrate, or, in other words, to each pixel of the part P2 of the matrix, is provided by a second bonding pad 902 of the sensor 2''. Each bonding pad 900, 902 receives an off-chip reference voltage GND. Each bonding pad 900, 902 acts as a low-pass filter, as it is schematically represented in Figure 9 by a resistance R and an inductance L series-connected in each bonding pad.

Preferably, the insulation structures 1000 are CDTI. In this case, it is preferable to provide a bias voltage to structure 1000 delimiting the part P1 of the matrix 200, which is electrically decoupled from a bias voltage provided to structure 1000 delimiting the part P2 of the matrix 200. For example, in Figure 9, the bias voltage of the CDTI 1000 of the part P1 of the matrix 200 is provided by a voltage generator 904, and the bias voltage of the CDTI 1000 of the part P2 of the matrix 200 is provided by a voltage generator 906, which is electrically decoupled form the generator 904.

Instead of the circuit CTRL1', the sensor 2" comprises a control circuit CTRL1''. The circuit CTRL1'' is configured to control reading phases and integration phases for the pixels of the matrix 200. The circuit CTRL1'' is configured to provide the control signals TG1 and TG2 (Figure 1) to the lines 204. The circuit CTRL1'' is further configured to provide the control signals RD to the lines 206.

In the embodiment of Figure 9, the lines 204, which are each connected to circuit CTRL1'', are parallel to the lines Vx. Each line 204 is shared by all the pixels of a corresponding row of the matrix. In figure 9, only one line 204 for each part P1, P2 of the matrix is fully represented in dashed lines, in order to avoid surcharging the Figure. Further, in order to avoid surcharging the Figure, only one line 204 by row is represented in Figure 9. However, in practice, each pixel receives control signals TG1 and TG2 (Figure 1) via two corresponding lines 204, and each row is thus associated to a line 204 for transmitting signal TG1 to all the pixels of the row, and to another line 204 for transmitting signal TG2 to all these pixels.

Although not shown on Figure 9, the other control signal provided to the pixels of the matrix 200 are preferably provided by the circuit CTRL1''. Further, similarly to what has been described for the sensor 2' of Figure 7, the sensor 2" comprises other conductive lines (not shown) to provide other control signals and voltages to the pixels of the matrix 200. For example, in the embodiment of Figure 9, the sensor 2'' comprises:
for each row of the matrix 200, a conductive line for transmitting, or providing, control signal TGAB (Figure 1) to all the pixels of the row;
for each row of the matrix 200, a conductive line for transmitting bias voltage VAB (Figure 1) to all the pixels of the row;
for each row of the matrix 200, a conductive line for transmitting voltage GND (Figure 1) to all the pixels of the row;
for each row of the matrix 200, a conductive line for transmitting signal RD (Figure 1) to each pixel of the column;
for each row of the matrix 200, a conductive line for transmitting signal RD1 (Figure 1) to all the pixels of the row; and
for each row of the matrix 200, a conductive line for transmitting signal RD2 (Figure 1) to all the pixels of the row.

Control circuits CTRL1'' and CTRL2 (not shown in Figure 9) are synchronized, for example by means of a synchronization circuit SYNC (not shown in Figure 9), which couples circuits CTRL1'' and CTRL2.

As for sensor 2', the matrix 200 of sensor 2" is divided in a plurality of areas, the total number of areas of the matrix being, preferably, equal to the total number of areas of the scene. In the example of Figure 9, the matrix 200 is divided in four areas M1, M2, M3 and M4. Each area M1, M2, M3, M4 comprises adjacent lines of pixels 1, parallel to the conductive lines 204. In the embodiment of Figure 9, each area M1, M2, M3, M4 comprises two adjacent lines of pixels 1 which are parallel to the lines 204, or, said in other words, each area M1, M2, M3, M4 comprises two adjacent rows of pixels 1. As already described for the sensors 2 and 2', in the sensor 2" the matrix 200 and the device 205 (not shown in Figure 9) are disposed relative to each other such that each area of the scene corresponds to an area M1, M2, M3, M4 of the matrix 200. In the example of Figure 9, areas M1 and M2 belong to part P1 of the matrix 200, areas M3 and M4 belonging to part P2 of the matrix 200.

The circuit CTRL1" is configured to provide different control signals TG1 and TG2 to the different areas M1, M2, M3 and M4 of the matrix 200, in a way similar to that described for the circuit CTRL1' (Figure 7). Compared to the circuit CTRL1' of the sensor 2' of Figure 7, the circuit CTRL1'' is further configured to simultaneously control charge transfers in the pixels of an area of one of the halves P1 and P2 of the matrix 200, and a reading of the pixels of an area of the other one of the halves P1 and P2. For example, when the pixels of the area M1 or M2 of the part P1 are in a reading phase (respectively in an integration phase) controlled by the circuit CTRL1'', the pixels of the area M3 or M4 of the part P1 are in an integration phase (respectively in a reading phase) controlled by the circuit CTRL1".

Preferably, for each voltage level which is provided to at least one pixel 1 of the part P1 of the matrix 200, and simultaneously to at least one pixel 1 of the other part P2 of the matrix, the sensor 2'' comprises a voltage generator configured to provides this voltage level to the part P1 of the matrix, and a voltage generator configured to provides this voltage level to the other part P2 of matrix. These two generators are electrically decoupled form each other.

In Figure 9, this is for example illustrated for the signals TG1 and TG2 provided to lines 204 by the circuit CTRL1". More specifically, when a pixel 1 of the matrix is in a reading phase, there is no charge transfer between the region PD (Figure 1) and the regions mem1 and mem2 (Figure 1) of this pixel. Thus, the control signals TG1 and TG2 provided to the transfers devices TGmem1 and TGmem2 (Figure 1) of this pixel, via corresponding lines 204, are maintained at an inactive state, which corresponds to a low voltage level TGmemL in this example. The same occurs when the pixel 1 is neither in a reading phase, nor in an integration phase. However, when a pixel 1 of the matrix is in an integration phase, charge transfers between the region PD (Figure 1) and the regions mem1 and mem2 (Figure 1) are performed. Thus, the control signals TG1 and TG2 provided to the transfers devices TGmem1 and TGmem2 (Figure 1) of this pixel, via corresponding lines 204, are repeatedly commuted between their inactive state (the low voltage level TGmemL in this example) and their active state, which corresponds to a high voltage level TGmemH in this example. As a result, in the sensor 2'', the voltage level TGmemH of the signals TG1 and TG2 is never provided simultaneously to a pixel of the part P1 and to a pixel of the part P2, whereas the low voltage level TGmemL is provided simultaneously to a pixel of the part P1 and to a pixel of the part P2. Thus, the sensor 2" comprises a voltage generator 910 configured to provide the voltage level TGmemL to part P1 of the matrix 200, and a voltage generator 912 configured to provide the voltage level TGmemL to the part P2 of the matrix 200. Further, as illustrated by Figure 9, the sensor 2'' may comprise only one voltage generator 908 configured to provide the voltage level TGmemH, which is for example alternatively to the part P1 and to the part P2 of the matrix by the circuit CTRL1''.

Although the prevision of two generators which are electrically decoupled from each other and configured to provide simultaneously the same voltage level to both parts P1 and P2 of the matrix 200 is here illustrated only for the voltage level TGmemL, those skilled in the art are capable to implement other pairs of electrically decoupled voltage generator for generating any voltage level which is provided simultaneously to both parts P1 and P2 of the matrix.

According to one embodiment, which is illustrated by Figure 9, the sensor 2" comprises a first reading circuit READOUT1 coupled the lines Vx of the half P1 of the matrix 200, and a second reading circuit READOUT2 coupled to the lines Vx of the half P2 of the matrix 200.

Circuit READOUT1, respectively READOUT2, is configured to received output signals of the pixels of the part P1, respectively P2, of matrix 200 which are coupled to the Vx lines of part P1, respectively P2, when these pixels are selected. Each reading circuit READOUT1 and READOUT2 for example comprises a plurality of analog-to-digital converters (ADC), preferably one ADC for each Vx line coupled to this reading circuit.

The circuit READOUT1 receives a reference voltage, in this example the ground GND, and the circuit READOUT2 receives a reference voltage, in this example the ground GND. The reference voltage GND of the circuit READOUT1 is electrically decoupled from that of the circuit READOUT2. For example, the reference voltage GND applied to the circuit READOUT1 is provided by a third bonding pad 912 of the sensor 2'', and the other reference voltage GND applied to the circuit READOUT2 is provided by a fourth bonding pad 914 of the sensor 2". Each bonding pad 912, 914 receives the off-chip reference voltage GND. Each bonding pad 912, 914 acts as a low-pass filter as schematically represented in Figure 9 by a resistance R and an inductance L series-connected in each bonding pad.

Figure 12 shows chronograms illustrating operation of the sensor of Figure 9 according to one embodiment. More specifically, in this example the scene to capture is divided in four area S1, S2, S3 and S4, and the Figure 12 shows, depending on time t, the light ("light") emitted by the illumination device 205 of the sensor 2'', which area S1, S2, S3 or S4 receives the light ("illuminated area of the scene"), which corresponding area M1, M2 of part P1 or M3, M4 of part P2 receives the reflected light and has its pixels integrating light ("integrated area of P1" and "integrated area of P2"), and which area M1, M2 of part P1 or M3, M4 of part P2 is read ("read area of P1" and "read area of P2"). In this example, the device 205 emits light under the form of a burst of periodic pulses of light.

Between an instant t20 and an instant t21 posterior to instant t20, device 205 emits light with the direction O1, towards the area S1 of the scene. The light reflected by this area S1 is received by the corresponding area M1 of part P1 of the matrix. An integration phase of the received light is done in the pixels of the area M1 only, thus only in part P1 of the matrix.

Between the instant t21 and an instant t22 posterior to instant t21, device 205 emits light with the direction O3, towards the area S3 of the scene. The light reflected by this area S3 is received by the corresponding area M3 of part P2 of the matrix. An integration phase of the received light is done in the pixels of the area M3 only, thus only in part P2 of the matrix. In the same time, the area M1 of the part P1 of the matrix is read. More specifically, the reading of the pixels of the area M1 is controlled by circuit CTRL1'', and is done by reading the rows of pixels of the area M1 ones after the other.

Between the instant t22 and an instant t23 posterior to instant t22, device 205 emits light with the direction O2, towards the area S2 of the scene. The light reflected by the area S2 is received by the corresponding area M2 of the matrix, and an integration phase is performed in the pixels of the area M2 only, thus only in part P1 of the matrix. In the same time, the area M3 of the part P2 of the matrix 200 is read, similarly to the manner the area M1 was read between instants t21 and t22.

Between the instant t23 and an instant t24 posterior to instant t23, device 205 emits light with the direction O4, towards the area S4 of the scene. The light reflected by the area S4 is received by the corresponding area M4 of the matrix, and an integration phase is performed in the pixels of the area M4 only, thus only in part P2 of the matrix. In the same time, the area M2 of the part P1 of the matrix 200 is read, similarly to the manner the area M1 was read between instants t21 and t22.

Between the instant t24 and an instant t25 posterior to instant t24, the area M4 of part P2 of the matrix 200 is read, similarly to the manner the area M1 was read between instants t21 and t22. At the instant t25, a depth map of the scene may be computed. More specifically, the depth map is generated based on the output signals of the pixels of the area M1 read between the instants t21 and t22, of the area M2 read between the instants t22 and t23, of the area M3 read between the instants t23 and t24, and of the area M4 read between the instants t24 and t25.

As it is represented in Figure 12, between the instants t24 and t24, device 205 may emits light with the direction O1, towards the area S1 of the scene, such that the reflected light is integrated by the area M1 only. This allows to start a new acquisition of the scene to capture, similar to that described between the instants t20 and t25. In another example, a blanking time is provided after the instant t25, and before a new acquisition of the scene implemented as described between instants t20 and t25.

Figure 13 illustrates, in a very schematic manner, an implementation of the sensor of Figure 9, according to one embodiment. Figure 13 is a top view of the disposition of the circuit READOUT1 and READOUT2 relative to the matrix 200.

In this embodiment, circuit READOUT1 is disposed along a first edge of the matrix 200, on the side of the half P1 of the matrix, circuit READOUT2 being disposed along a second edge of the matrix, on the side of the half P2. The first and second edges are parallel. More specifically, the first and second edges are perpendicular to the lines Vx (not shown on Figure 13).

This disposition of the circuits READOUT1 and READOUT2 relative to the matrix 200 is for example used when the circuits READOUT1 and READOUT2 belongs to the same semiconductor substrate than the matrix 200.

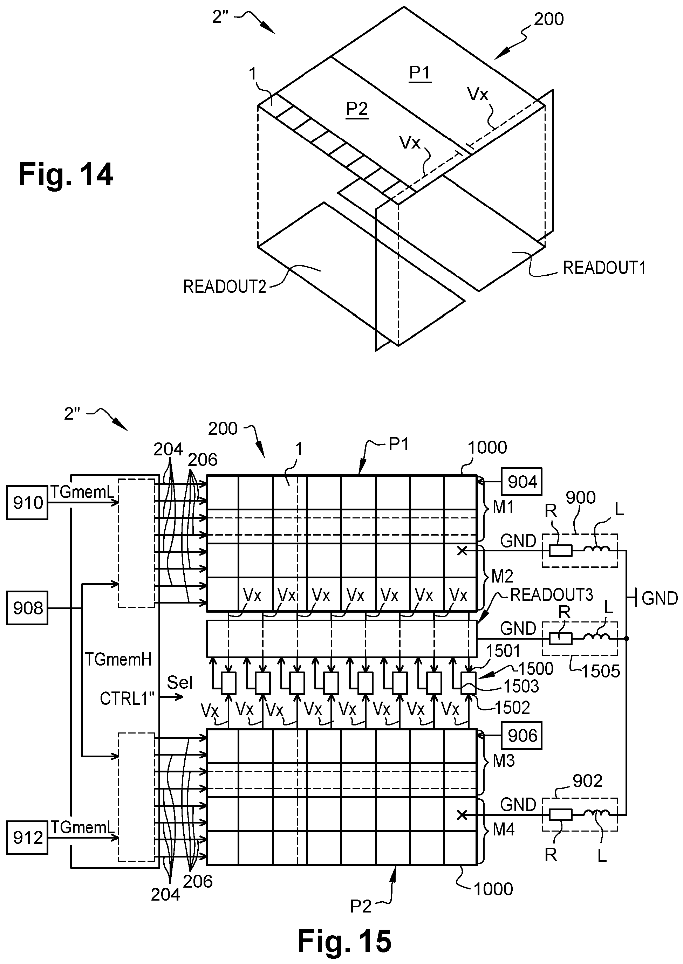

Figure 14 illustrates, in a very schematic manner, an implementation of the sensor of Figure 9, according to one alternative embodiment. Figure 14 is a perspective view of the disposition of the circuit READOUT1 and READOUT2 relative to the matrix 200.

In the embodiment of Figure 14, the matrix belongs to a first semiconductor substrate, and the circuits READOUT1 and READOUT2 belongs to a second semiconductor substrate. The first substrate is stacked over the second substrate.

The lines Vx of the part P1 of the matrix 200 are coupled to the circuit READOUT1, for example thank to an interconnexion structure (not shown) which is sandwiched between the first and second substrates. Similarly, the lines Vx of the part P2 of the matrix 200 are coupled to the circuit READOUT2, for example thank to same interconnexion structure. In Figure 14, only one line Vx is represented in dashed line, in each part P1, P2 of the matrix 200.

Preferably, as shown in Figure 14, the circuit READOUT1 is disposed below the part P1 of the matrix 200, the circuit READOUT2 being disposed below the part P2 of the matrix.

The embodiment of Figure 14 allows to get a more compact sensor 2''.

Preferably, the second substrate further comprises digital circuits, for example in CMOS technology, for example a circuit for processing signals provided by the circuits READOUT1 and READOUT2 in order to generate a depth map of a scene.

Figure 15 illustrates an alternative embodiment of the indirect time of flight sensor 2'' of the Figure 9. Only the differences between the sensor 2" of Figure 9 and the sensor 2" of Figure 15 are detailed. In figure 15, the two parts P1 and P2 of the matrix 200 are spaced from each other to simplify the illustration of the sensor 2'', although, in practice, these two parts P1 and P2 are adjacent to each other, the part P1 being disposed along the part P2, similarly to what has been described in relation with Figure 9.

In this alternative embodiment, a first semiconductor substrate comprises the matrix 200, and lies on a second semiconductor substrate. In other words, the two substrates are stacked one over the other.

The sensor 2'' further comprises commutators 1500, only one of the commutators 1500 being referenced in Figure 15 in order to avoid surcharging the Figure. The commutators 1500 belong to the second substrate. Preferably, the commutators 1500 are disposed below the limit between the two parts P1 and P2 of the matrix 200. The sensor 2'' comprises as much commutators 1500 as the half P1 of the matrix 200 comprises lines Vx.

Each commutator 1500 comprises a first input 1501, a second input 1502, an output 1503 and is controlled by a signal Sel. Each commutator 1500 is configured to electrically couple its input 1501 to its output 1503 when signal Sel is in a first state, and to couple its input 1502 to its output 1503 when signal Sel is in a second state.

In the alternative embodiment illustrated by Figure 15, each commutator 1500 has its input 1501 connected to a line Vx of the part P1 of the matrix 200, and its input 1502 connected to a corresponding line Vx of the part P2 of the matrix 200. A line Vx of the part P2 corresponds to a line Vx of the part P1 when these two lines belong to the same column of the matrix 200. In each column of the matrix 200, a line Vx of the part P2 of the matrix 200 corresponds to a line Vx of the part P1 of the matrix 200, for example, when the line Vx of the part P1 is selectively coupled to given outputs of the pixels of the part P1 disposed in this column, and the line Vx of part P2 is selectively coupled to corresponding outputs of the pixels of the part P2 disposed in said column.

In this alternative embodiment, instead of the two circuits READOUT1 and READOUT2, the sensor 2" comprises only one reading circuit READOUT3. Preferably, the circuit READOUT3 belongs to the same substrate as the commutators 1500. Although in Figure 15, the lines Vx of the part P1 seems to pass through the circuit READOUT3, as represented by portions of the lines Vx in dashed lines, in practice this is not the case. Preferably, a reference voltage GND applied to the circuit READOUT3 is provided by a bonding pad 1505 of the sensor 2'', which receives the off-chip reference voltage GND and acts as a low-pass filter as schematically represented in Figure 15 by a resistance R and an inductance L series-connected in the bonding pad 1505.

Each commutator 1500 has its outputs 1503 coupled, preferably connected, to the circuit READOUT3. The circuit READOUT3 for example comprises an ADC for each commutator 1500.

A control circuit, for example the circuit CTRL1'', is configured to control the commutators 1500 such that the output 1503 of each commutator is coupled to the input 1501 of this commutator during a reading of pixels of the half P1 of the matrix, and to the input 1502 of this commutator during a reading of pixels of the half P2 of the matrix. Said in other words, the circuit for controlling the commutators, in this example the circuit CTRL1'', is configured to provide the signal Sel at its first state during a reading of pixels of the half P1 of the matrix, and at its second state during a reading of pixels of the half P2 of the matrix.

In sensor 2'' of the Figure 15, when reading pixels of the part P1, respectively P2, of the matrix 200, each line Vx of part P1, respectively P2, is coupled by a corresponding commutator 1500 to the circuit READOUT3 which then receives output signals of theses pixels. Further, when reading pixels of the part P1, respectively P2, of the matrix 200, the circuit READOUT3 is insulated from the lines Vx of part P2, respectively P1, by the commutators 1500.

Compared to the sensor 2" described in relation with Figure 9, the sensor 2'' of Figure 15 is more compact as it comprises only one reading circuit.

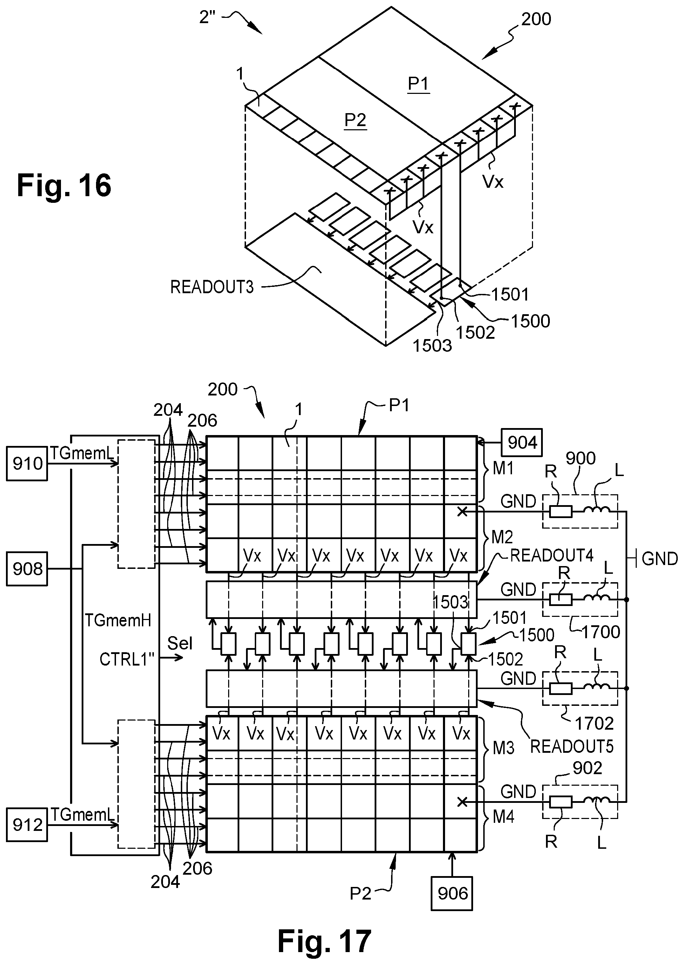

Figure 16 illustrates, in a very schematic manner, an implementation of the sensor 2'' of Figure 15 according to one embodiment. Figure 16 is perspective view of the disposition of the circuit READOUT3 and the commutators 1500 relative to the matrix 200.

As already indicated in relation with Figure 15, the matrix 200 belongs to a first semiconductor substrate (not represented in Figure 16), and the commutators 1500 belong to a second semiconductor substrate (not represented in Figure 16), the first substrate being stacked over the second substrate.

The lines Vx of the parts P1 and P2 of the matrix 200 are, for example, conductive lines of an interconnexion structure which is sandwiched between the first and second substrates, only one line Vx of the part P1 and one corresponding line Vx of the part P2 being represented in Figure 16 in order to avoid surcharging the Figure.

The commutators 1500 are disposed below the limit between the parts P1 and P2 of matrix 200, or, said in other words, below the common edge of the parts P1 and P2 of the matrix 200.

In this particular embodiment, the circuit READOUT3 belongs to the same substrate as the commutators 1500. The circuit READOUT3 is preferably disposed below the matrix 200, for example below the part P2 of the matrix as represented in Figure 16.

Preferably, the second substrate further comprises digital circuits, for example in CMOS technology, for example a circuit for processing signals provided by the circuit READOUT3 in order to generate a depth map of a scene.

The embodiments described in relation with Figures 15 and 16 for example correspond to a case where the pitch of the inputs of the circuit READOUT3, which are each connected to an output 1503 of a corresponding commutator 1500, is equal to or narrower than the pitch of the pixels 1 of the matrix 200 between two adjacent column of the matrix 200.

Figure 17 illustrates another alternative embodiment of the sensor 2'' of the Figure 9. Only the differences between the sensor 2'' of Figure 15 and the sensor 2" of Figure 17 are here detailed.

In this alternative embodiment, the sensor 2'' comprises two reading circuits READOUT4 and READOUT5 instead of the reading circuit READOUT3. Preferably, the circuits READOUT4 and READOUT5 belong to the same substrate as the commutators 1500. Although in Figure 17, the lines Vx of the part P1, respectively P2, seems to pass through the circuit READOUT4, respectively READOUT5, as represented by portions of the lines Vx in dashed lines, in practice this is not the case. Preferably, a reference voltage GND applied to the circuit READOUT4 is provided by a bonding pad 1700 of the sensor 2'', and a reference voltage GND applied to the circuit READOUT5 is provided by a bonding pad 1702 of the sensor 2''. Each bonding pad 1700 and 1702 receives the off-chip reference voltage GND and acts as a low-pass filter, as schematically represented in Figure 17 by a resistance R and an inductance L series-connected in each bonding pad.

As in Figure 15, each commutator 1500 has its input 1501 connected to a line Vx of the part P1 of the matrix and its input 1502 connected to a corresponding line Vx of the part P2 of the matrix.

However, in the embodiment of Figure 17, each commutator 1500 connected to lines Vx of an odd column of the matrix 200 has its output 1503 connected to the circuit READOUT4, whereas each commutator 1500 connected to lines Vx of an even column of the matrix 200 has its output 1503 connected to the circuit READOUT5. Each circuit READOUT4, REDAOUT5 for example comprises an ADC for each commutator 1500 coupled, preferably connected, to this circuit.

As already indicated in relation with Figure 15, a control circuit, for example the circuit CTRL1'', is configured to control the commutators 1500 such that the output 1503 of each commutator is coupled to the first input 1501 of this commutator during a reading of pixels of the half P1 of the matrix, and to the second input 1502 of this commutator during a reading of pixels of the half P2 of the matrix.

In the sensor 2'' of Figure 17, when reading pixels of the part P1, respectively P2, of the matrix 200, each line Vx of part P1, respectively P2, is coupled by a corresponding commutator 1500 to the circuit READOUT4 when this line Vx belongs to an odd column of the matrix 200 and to the circuit READOUT5 when this line Vx belongs to an even column of the matrix 200, such that each output signal of each of these pixels is received either by the circuit READOUT4 or the circuit READOUT 5. Further, during a reading of pixels of part P1, respectively P2, circuits READOUT4 and READOUT5 are insulated from the lines Vx of part P2, respectively P1, by the commutators 1500.

Preferably, the commutators 1500 are disposed below the limit between the parts P1 and P2 of the matrix 200. Preferably, the circuit READOUT4 is disposed below one of the parts P1 and P2 of the matrix 200, the circuit READOUT5 being disposed below the other one of the parts P1 and P2.

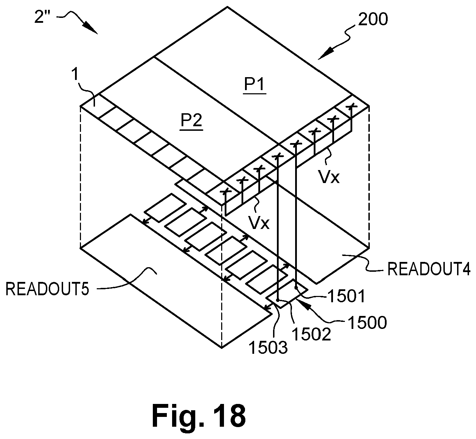

Figure 18 illustrates, in a very schematic manner, an implementation of the sensor 2'' of Figure 17 according to one embodiment. Figure 18 is perspective view of the disposition of the circuits READOUT4 and READOUT5 and of the commutators 1500 relative to the matrix 200.

As already indicated in relation with Figure 17, the matrix 200 belongs to a first semiconductor substrate (not represented in Figure 18), and the commutators 1500 belong to a second semiconductor substrate (not represented in Figure 18), the first substrate being stacked over the second substrate.

The lines Vx of the parts P1 and P2 of the matrix 200 are for example conductive lines of an interconnexion structure which is sandwiched between the first and second substrates, only one line Vx of the part P1 and one corresponding line Vx of the part P2 being represented in Figure 18 in order to avoid surcharging the Figure.

The commutator 1500 are disposed below the limit between the parts P1 and P2 of matrix 200, or, said in other words, below the common edge of the parts P1 and P2 of the matrix 200.

In this particular embodiment, circuits READOUT4 and REDAOUT5 belong to the same substrate as the commutators 1500. The circuit READOUT4 is disposed below one of the parts P1 and P2 of the matrix 200, the circuit READOUT5 being disposed below the other one of the parts P1 and P2. In the example of Figure 18, the circuit READOUT4 is disposed below the part P1 of the matrix, the circuit READOUT5 being disposed below the part P2 of the matrix.

Preferably, the second substrate further comprises digital circuits, for example in CMOS technology, for example a circuit for processing signals provided by the circuits READOUT4 and READOUT5 in order to generate a depth map of a scene.

The embodiments described in relation with Figures 17 and 18 for example correspond to a case where the pitch of the inputs of the circuits READOUT4 and READOUT5, which are each connected to an output 1503 of a corresponding commutator 1500, is larger than the pitch of the pixels 1 of the matrix 200 between two adjacent column of the matrix 200.

Various embodiments and variants have been described. Those skilled in the art will understand that certain features of these embodiments can be combined and other variants will readily occur to those skilled in the art. In particular, although in the above described embodiments, the scene to capture divided in only four areas S1, S2, S3 and S4, the illumination device 205 is configured to direct the light towards each of the areas S1, S2, S3, S4 of the scene by illuminating only one area at a time, and the matrix 200 is divided in four corresponding areas M1, M2, M3 and M4, those skilled in the art are capable to implement embodiment wherein the scene is divided into more (or less) than four areas, the device 205 is configured to independently illuminate each of these areas of the scene, and the matrix 200 is divided in areas such that each area of the matrix corresponds to an area of the scene. Further, those skilled in the art are capable of implementing embodiments in which the pixels of the matrix 200 are different from pixel 1 described in relation with Figure 1, and in more for a specific example in relation with Figures 10 and 11.

Finally, the practical implementation of the embodiments and variants described herein is within the capabilities of those skilled in the art based on the functional description provided hereinabove.

## Claims

1. An indirect time of flight sensor (2; 2'; 2'') comprising:
a matrix (200) of pixels (1) each comprising a photoconversion region (PD) and at least two sets (E1; E2) each comprising a charge storage region (mem1; mem2) and
a controllable transfer device (TGmem1; TGmem2) for transferring charges from the photoconversion region (PD) towards said storage region (mem1; mem2) when its control signal (TG1, TG2) is active;
first conductive lines (204) parallel to each other, configured to transmit first control signals (TG1; TG2) to the transfer devices (TGmem1; TGmem2);
a first circuit (CTRL1; CTRL1'; CTRL1") configured to provide the first control signals (TG1; TG2) to the first conductive lines (204);
an illumination device (205) for illuminating a scene to capture; and
a second circuit (CTRL2) configured to control the illumination device (205),
wherein:
the scene is divided into first areas (S1, S2, S3, S4);
the illumination device (205) and the second circuit (CTRL2) are configured to illuminate successively each first area (S1, S2, S3, S4);
the matrix (200) is divided into second areas (M1, M2, M3,
M4) each comprising adjacent lines of pixels (1), parallel to the first conductive lines (204);
a disposition of the matrix (200) and of the illumination device (205) is configured such that each first area (S1, S2, S3, S4) corresponds to one of the second areas (M1, M2, M3, M4); **characterised in that** the first circuit (CTRL1) is configured to provide different first control signals (TG1, TG2) to the different second areas (M1, M2, M3, M4) such that the first control signals (TG1, TG2) are repeatedly commuted between active and inactive states only for the pixels (1) of the second area (M1, M2, M3, M4) of the matrix (200) corresponding to the first area (S1, S2, S3, S4) of the scene which is illuminated.

2. The sensor according to claim 1, wherein the illumination device (205) comprises an array (300) of laser sources (301) and an optical device (302) configurated to direct (O1, O2, O3, O4) light emitted by the array (300) of laser sources towards the scene, and wherein:
the array (300) is divided in sets (A1, A2, A3, A4) of laser sources, each set being configured to illuminate a corresponding one of the first areas (S1, S2, S3, S4), the second
circuit (CTRL2) being configured to control said sets (A1, A2, A3, A4) one after the other; and/or
the optical device (302) is configured to direct the emitted light differently depending on a control signal (cmd), the second circuit (CTRL2) being configured to provide, at each illumination of one of the first areas (S1, S2, S3,
S4), said control signal (cmd) corresponding to a directing of the light towards said one of the first areas.

3. The sensor according to claim 1 or 2, wherein:
the sensor (2) comprises second conductive lines (Vx) parallel to the first conductive lines (204) and configured to receive output signals of the pixels (1);
each pixel comprises a selection device (108) configured to selectively couple output(s) (106) of said pixel (1) to at least one corresponding second conductive line (Vx); and
the first circuit (CTRL1) is configured to provide second control signals (RD) to the selection devices (108) via third conductive lines (206) perpendicular to the second conductive lines (Vx).

4. The sensor according to claim 3, wherein the first circuit (CTRL1) is configured to control, by means of the second control signals (RD), a reading of all the pixels (1) after each illumination of one of the first areas (S1, S2, S3, S4), before an illumination of a next one of the first areas (S1, S2, S3, S4).

5. The sensor according to claim 1 or 2, wherein:
the sensor (2';2'') comprises second conductive lines (Vx) parallel to each other and perpendicular to the first conductive lines (204), the second conductive lines (Vx) being configured to receive output signals of the pixels (1);
each pixel (1) comprises a selection device (108) configured to selectively couple output(s) (106) of said pixel (1) to at least one corresponding second conductive line (Vx);
and
the first circuit (CTRL1'; CTRL1'') is configured to provide second control signals (RD) to the selection devices (108) via third conductive lines (206) perpendicular the second conductive lines (Vx).

6. The sensor according to claim 3 or 5, wherein the second circuit (CTL2) is configured, before each reading of all the pixels (1) controlled by the first circuit (CTRL1; CTRL1'), to control several successive illumination cycles each comprising a unique illumination of each first area (S1, S2, S3, S4), and to control an absence of light emission by the illumination device (205) during said reading.

7. The sensor according to claim 5, wherein the first circuit (CTRL1'; CTRL1'') is configured to control, after each illumination of one of the first areas (S1, S2, S3, S4), a reading of only the pixels of the second area (M1, M2, M3, M4) corresponding to said first area (S1, S2, S3, S4).

8. The sensor according to claim 7, wherein the second circuit (CTRL2) is configured to control an absence of light emission by the illumination device (205) when the first circuit (CTRL1') controls the reading of the pixels (1) of one of the second areas (M1, M2, M3, M4).

9. The sensor according to claim 7, wherein:
the matrix (200) is divided in first (P1) and second (P2) halves, a limit between first and second halves (P1, P2) being parallel to the first conductive lines (204), and the second conductive
lines (Vx) of each half (P1, P2) ended at said limit; the first circuit (CTRL1'') is configured to simultaneously control charge transfers in the pixels (1) of one of the second areas (M1, M2; M3, M4) of one of the halves (P1; P2) and a reading of the pixels of one of the second areas (M3, M4; M1, M2) of the other one of the halves (P2; P1);
a first part of a semiconductor substrate (1003) comprises the first half (P1) of the matrix (200) and a second part of said substrate (1003) comprises the second half (P2) of the matrix (200);
insulation structures (1000) passing through the substrate (1003) insulate said parts of the substrate from each other; and
a reference voltage (GND) provided to the first part of the substrate is electrically decoupled from a reference voltage (GND) provided to the second part of the substrate.

10. The sensor according to claim 9, wherein, for each voltage level (TGmemL) intended to be provided to at least one pixel (1) of the first half (P1) of the matrix (200), and, simultaneously, to at least one pixel (1) of the second half (P2) of the matrix (200), the sensor (2'') comprises a generator (910) of said voltage level (TGmemL) for the first half (P1) and a generator (912) of said voltage level (TGmemL) for the second half (P2), the generators (910, 912) being electrically decoupled from each other.

11. The sensor according to claim 9 or 10, comprising a first reading circuit (READOUT1) coupled the second conductive lines (Vx) of the first half (P1) of the matrix (200), and a second reading circuit (READOUT2) coupled to the second lines (Vx) of the second half (P2) of the matrix (200), a reference voltage (GND) of the first reading circuit (READOUT1) being electrically decoupled from a reference voltage (GND) of the second reading circuit (READOUT2).

12. The sensor according to claim 11, wherein the first reading circuit (READOUT1) is disposed along a first edge of the matrix (200), on the side of the first half (P1), and the second reading circuit (READOUT2) is disposed along a second edge of the matrix (200), on the side of the second half (P2), the first and second edges being parallel.

13. The sensor according to claim 9 or 10, wherein:
the substrate (1003) comprising the matrix (200) of pixels (1) lies on another semiconductor substrate comprising commutators (1500), the commutators (1500) being preferably disposed below the limit between the halves (P1, P2) of the matrix (200);
each commutator (1500) comprises a first input (1501) connected to one of the second conductive lines (Vx) of the first half (P1), a second input (1502) connected to a corresponding second conductive line (Vx) of the second half (P2), and an output (1503) configured to be selectively coupled to one of said inputs (1501, 1502); and
the sensor (2'') comprises a reading circuit (READOUT3) connected to the output (1503) of each commutator (1500), the reading circuit (READOUT3) preferably belonging to the same substrate than the commutators (1500).

14. The sensor according to claim 9 or 10, wherein:
the substrate (1003) comprising the matrix (200) of pixels (1) lies on another semiconductor substrate comprising commutators (1500), the commutators (1500) being preferably disposed below the limit between the halves (P1, P2) of the matrix (200);
each commutator (1500) comprises a first input (1501) connected to one of the second conductive lines (Vx) of the first half (P1), a second input (1502) connected to a corresponding second conductive line (Vx) of the second half (P2), and an output (1503) configured to be selectively coupled to one of said inputs (1501, 1502);
the pixels (1) of the matrix (200) are arranged in column parallel to the second conductive lines (Vx);
each commutator (1500) connected to second conductive lines (Vx) of an odd column has its output (1503) connected to a first reading circuit (READOUT4);
each commutator (1500) connected to second conductive lines (Vx) of an even column has its output (1503) connected to a second reading circuit (READOUT5); and
the first and second reading circuits (READOUT4, READOUT5) preferably belonging to the same substrate than the commutators (1500).

15. The sensor according to claim 13 or 14, comprising a control circuit (CTRL1'') for controlling the commutators (1500) such that the output (1503) of each commutator is coupled to the first input (1501) of said commutator during a reading of pixels (1) of the first half (P1) of the matrix (200), and to the second input (1502) of said commutator (1500) during a reading of pixels (1) of the second half (P2) of the matrix (200).

## Patentansprüche

1. Ein indirekter Laufzeit-Sensor (2; 2'; 2"), der Folgendes aufweist:
eine Matrix (200) von Pixeln (1), jeweils aufweisend einen Photokonversionsbereich (PD) und wenigstens zwei Sätze (E1; E2), jeweils aufweisend einen Ladungsspeicherbereich (mem1; mem2) und eine steuerbare Übertragungsvorrichtung (TGmem1; TGmem2) zum Übertragen von Ladungen von dem Photokonversionsbereich (PD) zu dem Speicherbereich (mem1; mem2),
wenn ihr Steuersignal (TG1, TG2) aktiv ist;
erste leitende Leitungen (204) parallel zueinander, konfiguriert zum Übertragen erster Steuersignale (TG1; TG2) zu den Übertragungsvorrichtungen (TGmem1; TGmem2);
eine erste Schaltung (CTRL1; CTRL1'; CTRL1") konfiguriert zum Bereitstellen der ersten Steuersignale (TG1; TG2) an die ersten leitenden Leitungen (204);
eine Beleuchtungsvorrichtung (205) zum Beleuchten einer zu erfassenden Szene; und
eine zweite Schaltung (CTRL2) konfiguriert zum Steuern der Beleuchtungsvorrichtung (205),
wobei:
die Szene in erste Bereiche (S1, S2, S3, S4) unterteilt ist;
die Beleuchtungsvorrichtung (205) und der zweite Schaltkreis (CTRL2) konfiguriert sind, um nacheinander jeden ersten Bereich (S1, S2, S3, S4) zu beleuchten;
die Matrix (200) in zweite Bereiche (M1, M2, M3, M4) unterteilt ist, die jeweils benachbarte Leitungen von Pixeln (1) aufweisen parallel zu den ersten leitenden Leitungen (204);
eine Anordnung der Matrix (200) und der Beleuchtungsvorrichtung (205) so konfiguriert ist, dass jeder erste Bereich (S1, S2, S3, S4) einem der zweiten Bereiche (M1, M2, M3, M4) entspricht;
**dadurch gekennzeichnet, dass** die erste Schaltung (CTRL1) konfiguriert ist zum Bereitstellen verschiedener erster Steuersignale (TG1, TG2) an die verschiedenen zweiten Bereiche (M1, M2, M3, M4), so dass die ersten Steuersignale (TG1, TG2) wiederholt zwischen aktiven und inaktiven Zuständen umgeschaltet werden, nur für die Pixel (1) des zweiten Bereichs (M1, M2, M3, M4) der Matrix (200), der dem ersten Bereich (S1, S2, S3, S4) der Szene entspricht, der beleuchtet wird.

2. Der Sensor nach Anspruch 1, wobei die Beleuchtungsvorrichtung (205) ein Array (300) von Laserquellen (301) und eine optische Vorrichtung (302) aufweist, die konfiguriert ist zum Richten (O1, O2, O3, O4) von Licht, das von dem Array (300) von Laserquellen emittiert wird, auf die Szene, und wobei:
das Array (300) in Sätze (A1, A2, A3, A4) von Laserquellen unterteilt ist, wobei jeder Satz konfiguriert ist zum Beleuchten eines entsprechenden der ersten Bereiche (S1, S2, S3, S4), wobei die zweite Schaltung (CTRL2) konfiguriert ist zum Steuern der Sätze (A1, A2, A3, A4) einer nach dem anderen; und/oder die optische Vorrichtung (302) konfiguriert ist zum Richten des emittierten Lichts auf unterschiedliche Weise in Abhängigkeit von einem Steuersignal (cmd), wobei die zweite Schaltung (CTRL2) konfiguriert ist zum Bereitstellen, bei jeder Beleuchtung eines der ersten Bereiche (S1, S2, S3, S4), des Steuersignals (cmd) entsprechend einer Ausrichtung des Lichts auf den einen der ersten Bereiche.

3. Der Sensor nach Anspruch 1 oder 2, wobei:
der Sensor (2) zweite leitende Leitungen (Vx) aufweist parallel zu den ersten leitenden Leitungen (204) und konfiguriert zum Empfangen von Ausgangssignalen der Pixel (1);
jedes Pixel eine Auswahlvorrichtung (108) aufweist, konfiguriert zum selektiven Koppeln der Ausgänge (106) des Pixels (1) mit wenigstens einer entsprechenden zweiten leitenden Leitung (Vx); und
die erste Schaltung (CTRL1) konfiguriert ist zum Bereitstellen zweiter Steuersignale (RD) an die Auswahlvorrichtungen (108) über dritte leitende Leitungen (206) senkrecht zu den zweiten leitenden Leitungen (Vx).

4. Der Sensor nach Anspruch 3, wobei die erste Schaltung (CTRL1) konfiguriert ist zum Steuern, mittels der zweiten Steuersignale (RD), eines Auslesens aller Pixel (1) nach jeder Beleuchtung eines der ersten Bereiche (S1, S2, S3, S4), vor einer Beleuchtung eines nächsten der ersten Bereiche (S1, S2, S3, S4).

5. Der Sensor nach Anspruch 1 oder 2, wobei:
der Sensor (2'; 2") zweite leitende Leitungen (Vx) aufweist, parallel zueinander und senkrecht zu den ersten leitenden Leitungen (204), wobei die zweiten leitenden Leitungen (Vx) konfiguriert sind zum Empfangen von Ausgangssignalen der Pixel (1);
jedes Pixel (1) eine Auswahleinrichtung (108) aufweist, konfiguriert zum selektiven Koppeln der Ausgänge (106) des Pixels (1) mit wenigstens einer entsprechenden zweiten leitenden Leitung (Vx); und
die erste Schaltung (CTRL1'; CTRL1") konfiguriert ist zum Bereitstellen zweiter Steuersignale (RD) an die Auswahlvorrichtungen (108) über dritte leitende Leitungen (206), senkrecht zu den zweiten leitenden Leitungen (Vx).

6. Der Sensor nach Anspruch 3 oder 5, wobei die zweite Schaltung (CTL2) konfiguriert ist, vor jedem Lesen aller Pixel (1), die von der ersten Schaltung (CTRL1; CTRL1') gesteuert werden, zum Steuern mehrerer aufeinanderfolgender Beleuchtungszyklen, die jeweils eine einmalige Beleuchtung jedes ersten Bereichs (S1, S2, S3, S4) aufweisen, und zum Steuern eines Fehlens von Lichtemission durch die Beleuchtungsvorrichtung (205) während des Lesens.

7. Der Sensor nach Anspruch 5, wobei die erste Schaltung (CTRL1'; CTRLI") konfiguriert ist zum Steuern, nach jeder Beleuchtung eines der ersten Bereiche (S1, S2, S3, S4), eines Lesens von nur den Pixeln des zweiten Bereichs (M1, M2, M3, M4), der dem ersten Bereich (S1, S2, S3, S4) entspricht.

8. Der Sensor nach Anspruch 7, wobei die zweite Schaltung (CTRL2) konfiguriert ist zum Steuern eines Fehlens von Lichtemission durch die Beleuchtungsvorrichtung (205), wenn die erste Schaltung (CTRL1') das Lesen der Pixel (1) eines der zweiten Bereiche (M1, M2, M3, M4) steuert.

9. Der Sensor nach Anspruch 7, wobei:
die Matrix (200) in eine erste (P1) und eine zweite (P2) Hälfte unterteilt ist, wobei eine Grenze zwischen der ersten und der zweiten Hälfte (P1, P2) parallel zu den ersten leitenden Leitungen (204) verläuft und die zweiten leitenden Leitungen (Vx) jeder Hälfte (P1, P2) an dieser Grenze enden;
die erste Schaltung (CTRL1") konfiguriert ist zum gleichzeitigen Steuern von Ladungsübertragungen in den Pixeln (1) eines der zweiten Bereiche (M1, M2; M3, M4) einer der Hälften (P1, P2) und eines Lesens der Pixel von einem der zweiten Bereiche (M3, M4; M1, M2) der anderen der Hälften (P2; P1);
ein erster Teil eines Halbleitersubstrats (1003) die erste Hälfte (P1) der Matrix (200) aufweist und ein zweiter Teil des Substrats (1003) die zweite Hälfte (P2) der Matrix (200) aufweist;
Isolationsstrukturen (1000), die durch das Substrat (1003) verlaufen, die Teile des Substrats voneinander isolieren; und
eine Referenzspannung (GND), die an den ersten Teil des Substrats angelegt wird, elektrisch von einer Referenzspannung (GND) entkoppelt ist, die an den zweiten Teil des Substrats angelegt wird.

10. Der Sensor nach Anspruch 9, wobei für jeden Spannungspegel (TGmemL), der an mindestens ein Pixel (1) der ersten Hälfte (P1) der Matrix (200) geliefert werden soll, und gleichzeitig an mindestens ein Pixel (1) der zweiten Hälfte (P2) der Matrix (200), der Sensor (2") einen Generator (910) des Spannungspegels (TGmemL) für die erste Hälfte (P1) aufweist und einen Generator (912) des Spannungspegels (TGmemL) für die zweite Hälfte (P2), wobei die Generatoren (910, 912) elektrisch voneinander entkoppelt sind.

11. Der Sensor nach Anspruch 9 oder 10, aufweisend eine eine erste Leseschaltung (READOUT1), die mit den zweiten leitenden Leitungen (Vx) der ersten Hälfte (P1) der Matrix (200) gekoppelt ist, und eine zweite Leseschaltung (READOUT2), die mit den zweiten Leitungen (Vx) der zweiten Hälfte (P2) der Matrix (200) gekoppelt ist, wobei eine Referenzspannung (GND) der ersten Leseschaltung (READOUT1) von einer Referenzspannung (GND) der zweiten Leseschaltung (READOUT2) elektrisch entkoppelt ist.

12. Der Sensor nach Anspruch 11, wobei die erste Leseschaltung (READOUT1) entlang einer ersten Kante der Matrix (200) auf der Seite der ersten Hälfte (P1) angeordnet ist, und die zweite Leseschaltung (READOUT2) entlang einer zweiten Kante der Matrix (200) auf der Seite der zweiten Hälfte (P2) angeordnet ist, wobei die erste und die zweite Kante parallel sind.

13. Der Sensor nach Anspruch 9 oder 10, wobei:
das Substrat (1003), das die Matrix (200) der Pixel (1) aufweist, auf einem anderen Halbleitersubstrat liegt, das Kommutatoren (1500) aufweist, wobei die Kommutatoren (1500) vorzugsweise unterhalb der Grenze zwischen den Hälften (P1, P2) der Matrix (200) angeordnet sind;
jeder Kommutator (1500) einen ersten Eingang (1501) aufweist, der mit einer der zweiten leitenden Leitungen (Vx) der ersten Hälfte (P1) verbunden ist, einen zweiten Eingang (1502), der mit einer entsprechenden zweiten leitenden Leitung (Vx) der zweiten Hälfte (P2) verbunden ist, und einen Ausgang (1503), der konfiguriert ist, selektiv mit einem der Eingänge (1501, 1502) verbunden zu werden; und
der Sensor (2") eine Leseschaltung (READOUT3) aufweist, die mit dem Ausgang (1503) jedes Kommutators (1500) verbunden ist, wobei die Leseschaltung (READOUT3) vorzugsweise zu demselben Substrat gehört wie die Kommutatoren (1500).

14. Der Sensor nach Anspruch 9 oder 10, wobei:
das Substrat (1003), das die Matrix (200) von Pixeln (1) aufweist, auf einem anderen Halbleitersubstrat liegt, das Kommutatoren (1500) aufweist, wobei die Kommutatoren (1500) vorzugsweise unterhalb der Grenze zwischen den Hälften (P1, P2) der Matrix (200) angeordnet sind;
jeder Kommutator (1500) einen ersten Eingang (1501) aufweist, der mit einer der zweiten leitenden Leitungen (Vx) der ersten Hälfte (P1) verbunden ist, einen zweiten Eingang (1502), der mit einer entsprechenden zweiten leitenden Leitung (Vx) der zweiten Hälfte (P2) verbunden ist, und einen Ausgang (1503), der konfiguriert ist, selektiv mit einem der Eingänge (1501, 1502) gekoppelt zu werden;
die Pixel (1) der Matrix (200) in einer Spalte parallel zu den zweiten leitenden Leitungen (Vx) angeordnet sind;
jeder Kommutator (1500), der mit den zweiten leitenden Leitungen (Vx) einer ungeraden Spalte verbunden ist, seinen Ausgang (1503) mit einer ersten Leseschaltung (READOUT4) verbunden hat;
jeder Kommutator (1500), der mit zweiten leitenden Leitungen (vx) einer geraden Spalte verbunden ist, ist seinen Ausgang (1503) mit einer zweiten Leseschaltung (READOUT5) verbunden hat; und
die erste und die zweite Leseschaltung (READOUT4, READOUT5) vorzugsweise zu demselben Substrat gehören wie die Kommutatoren (1500).

15. Der Sensor nach Anspruch 13 oder 14, der eine Steuerschaltung (CTRL1") zum Steuern der Kommutatoren (1500) aufweist, so dass der Ausgang (1503) jedes Kommutators mit dem ersten Eingang (1501) des Kommutators gekoppelt ist, während Pixel (1) der ersten Hälfte (P1) der Matrix (200) gelesen werden, und mit dem zweiten Eingang (1502) des Kommutators (1500) während Pixel (1) der zweiten Hälfte (P2) der Matrix (200) gelesen werden.

## Revendications

1. Capteur de temps de vol indirect (2 ; 2' ; 2") comprenant :
une matrice (200) de pixels (1) comprenant chacun une région de photoconversion (PD) et au moins deux ensembles (E1 ; E2) comprenant chacun une région de stockage de charges (mem1 ; mem2) et un dispositif de transfert commandable (TGmem1 ; TGmem2) pour transférer des charges de la région de photoconversion (PD) vers ladite région de stockage (mem1 ; mem2) lorsque son signal de commande (TG1 ; TG2) est actif ;
des premières lignes conductrices (204) parallèles les unes aux autres, configurées pour transmettre des premiers signaux de commande (TG1 ; TG2) aux dispositifs de transfert (TGmem1 ; TGmem2) ;
un premier circuit (CTRL1 ; CTRL1' ; CTRL1") configuré pour fournir les premiers signaux de commande (TG1 ; TG2) aux premières lignes conductrices (204) ;
un dispositif d'éclairage (205) pour éclairer une scène à capturer ; et
un deuxième circuit (CTRL2) configuré pour commander le dispositif d'éclairage (205),
dans lequel :
la scène est divisée en premières zones (S1, S2, S3, S4) ;
le dispositif d'éclairage (205) et le deuxième circuit (CTRL2) sont configurés pour éclairer successivement chaque première zone (S1, S2, S3, S4) ;
la matrice (200) est divisée en deuxièmes zones (M1, M2, M3, M4) comprenant chacune des lignes adjacentes de pixels (1), parallèles aux premières lignes conductrices (204) ;
une disposition de la matrice (200) et du dispositif d'éclairage (205) est configurée de sorte que chaque première zone (S1, S2, S3, S4) corresponde à l'une des deuxièmes zones (M1, M2, M3, M4) ; **caractérisé en ce que**
le premier circuit (CTRL1) est configuré pour fournir différents premiers signaux de commande (TG1, TG2) aux différentes deuxièmes zones (M1, M2, M3, M4) de sorte que les premiers signaux de commande (TG1, TG2) soient commutés de façon répétée entre des états actif et inactif uniquement pour les pixels (1) de la deuxième zone (M1, M2, M3, M4) de la matrice (200) correspondant à la première zones (S1, S2, S3, S4) de la scène qui est éclairée.

2. Capteur selon la revendication 1, dans lequel le dispositif d'éclairage (205) comprend un réseau (300) de sources laser (301) et un dispositif optique (302) configuré pour diriger (O1, O2, O3, O4) la lumière émise par le réseau (300) de sources laser vers la scène, et dans lequel :
le réseau (300) est divisé en ensembles (A1, A2, A3, A4) de sources laser, chaque ensemble étant configuré pour éclairer une zone correspondante parmi les premières zones (S1, S2, S3, S4), le deuxième circuit (CTRL2) étant configuré pour commander lesdits ensembles (A1, A2, A3, A4) l'un après l'autre ; et/ou
le dispositif optique (302) est configuré pour diriger différemment la lumière émise en fonction d'un signal de commande (cmd), le deuxième circuit (CTRL2) étant configuré pour fournir, à chaque éclairement d'une des premières zones (S1, S2, S3, S4), ledit signal de commande (cmd) correspondant à une orientation de la lumière vers ladite une des premières zones.

3. Capteur selon la revendication 1 ou 2, dans lequel :
le capteur (2) comprend des deuxièmes lignes conductrices (Vx) parallèles aux premières lignes conductrices (204) et configurées pour recevoir des signaux de sortie des pixels (1) ;
chaque pixel comprend un dispositif de sélection (108) configuré pour relier sélectivement une ou des sorties (106) dudit pixel (1) à au moins une deuxième ligne conductrice correspondante (Vx) ; et
le premier circuit (CTRL1) est configuré pour fournir des deuxièmes signaux de commande (RD) aux dispositifs de sélection (108) par l'intermédiaire de troisièmes lignes conductrices (206) perpendiculaires aux deuxièmes lignes conductrices (Vx).

4. Capteur selon la revendication 3, dans lequel le premier circuit (CTRL1) est configuré pour commander, au moyen des deuxièmes signaux de commande (RD), une lecture de tous les pixels (1) après chaque éclairage d'une des premières zones (S1, S2, S3, S4), avant un éclairage d'une zone suivante parmi les premières zones (S1, S2, S3, S4).

5. Capteur selon la revendication 1 ou 2, dans lequel :
le capteur (2' ;2") comprend des deuxièmes lignes conductrices (Vx) parallèles les unes aux autres et perpendiculaires aux premières lignes conductrices (204), les deuxièmes lignes conductrices (Vx) étant configurées pour recevoir des signaux de sortie des pixels (1) ;
chaque pixel (1) comprend un dispositif de sélection (108) configuré pour relier sélectivement une ou des sorties (106) dudit pixel (1) à au moins une deuxième ligne conductrice correspondante (Vx) ; et
le premier circuit (CTRL1' ; CTRL1") est configuré pour fournir des deuxièmes signaux de commande (RD) aux dispositifs de sélection (108) par l'intermédiaire de troisièmes lignes conductrices (206) perpendiculaires aux deuxièmes lignes conductrices (Vx).

6. Capteur selon la revendication 3 ou 5, dans lequel le deuxième circuit (CTL2) est configuré, avant chaque lecture de tous les pixels (1) commandés par le premier circuit (CTRL1 ; CTRL1'), pour commander plusieurs cycles d'éclairage successifs comprenant chacun un seul éclairage de chaque première zone (S1, S2, S3, S4), et pour commander une absence d'émission lumineuse par le dispositif d'éclairage (205) pendant ladite lecture.

7. Capteur selon la revendication 5, dans lequel le premier circuit (CTRL1' ; CTRL1") est configuré pour commander, après chaque éclairement d'une des premières zones (S1, S2, S3, S4), une lecture uniquement des pixels de la deuxième zone (M1, M2, M3, M4) correspondant à ladite première zone (S1, S2, S3, S4).

8. Capteur selon la revendication 7, dans lequel le deuxième circuit (CTRL2) est configuré pour commander une absence d'émission de lumière par le dispositif d'éclairage (205) lorsque le premier circuit (CTRL1') commande la lecture des pixels (1) d'une des deuxièmes zones (M1, M2, M3, M4).

9. Capteur selon la revendication 7, dans lequel :
la matrice (200) est divisée en une première (P1) et une deuxième (P2) moitiés, une limite entre les première et deuxième moitiés (P1, P2) étant parallèle aux premières lignes conductrices (204), et les deuxièmes lignes conductrices (Vx) de chaque moitié (P1, P2) se terminaient au niveau de ladite limite ;
le premier circuit (CTRL1") est configuré pour commander simultanément des transferts de charges dans les pixels (1) d'une des deuxièmes zones (M1, M2 ; M3, M4) de l'une des moitiés (P1 ; P2) et une lecture des pixels d'une des deuxièmes zones (M3, M4 ; M1, M2) de l'autre des moitiés (P2 ; P1) ;
une première partie d'un substrat semiconducteur (1003) comprend la première moitié (P1) de la matrice (200) et une deuxième partie dudit substrat (1003) comprend la deuxième moitié (P2) de la matrice (200) ;
des structures d'isolation (1000) traversant le substrat (1003) isolent lesdites parties du substrat les unes des autres ; et
une tension de référence (GND) fournie à la première partie du substrat est découplé électriquement d'une tension de référence (GND) fournie à la deuxième partie du substrat.

10. Capteur selon la revendication 9, dans lequel, pour chaque niveau de tension (TGmemL) destiné à être fourni à au moins un pixel (1) de la première moitié (P1) de la matrice (200), et, en même temps, à au moins un pixel (1) de la deuxième moitié (P2) de la matrice (200), le capteur (2") comprend un générateur (910) dudit niveau de tension (TGmemL) pour la première moitié (P1) et un générateur (912) dudit niveau de tension (TGmemL) pour la deuxième moitié (P2), les générateurs (910, 912) étant découplés électriquement l'un de l'autre.

11. Capteur selon la revendication 9 ou 10, comprenant un premier circuit de lecture (READOUT1) relié aux deuxièmes lignes conductrices (Vx) de la première moitié (P1) de la matrice (200), et un deuxième circuit de lecture (READOUT2) relié aux deuxièmes lignes conductrices (Vx) de la deuxième moitié (P2) de la matrice (200), une tension de référence (GND) du premier circuit de lecture (READOUT1) étant découplée électriquement d'une tension de référence (GND) du deuxième circuit de lecture (READOUT2) .

12. Capteur selon la revendication 11, dans lequel le premier circuit de lecture (READOUT1) est disposé le long d'un premier bord de la matrice (200), du côté de la première moitié (P1), et le deuxième circuit de lecture (READOUT2) est disposé le long d'un deuxième bord de la matrice (200), du côté de la deuxième moitié (P2), les premier et deuxième bords étant parallèles.

13. Capteur selon la revendication 9 ou 10, dans lequel :
le substrat (1003) comprenant la matrice (200) de pixels (1) repose sur un autre substrat semiconducteur comprenant des commutateurs (1500), les commutateurs (1500) étant de préférence disposés en-dessous de la limite entre les moitiés (P1, P2) de la matrice (200) ;
chaque commutateur (1500) comprend une première entrée (1501) connectée à l'une des deuxièmes lignes conductrices (Vx) de la première moitié (P1), une deuxième entrée (1502) connectée à une deuxième ligne conductrice correspondante (Vx) de la deuxième moitié (P2), et une sortie (1503) configurée pour être reliée sélectivement à l'une desdites entrées (1501, 1502) ; et
le capteur (2") comprend un circuit de lecture (READOUT3) connecté à la sortie (1503) de chaque commutateur (1500), le circuit de lecture (READOUT3) appartenant de préférence au même substrat que les commutateurs (1500).

14. Capteur selon la revendication 9 ou 10, dans lequel :
le substrat (1003) comprenant la matrice (200) de pixels (1) repose sur un autre substrat semiconducteur comprenant des commutateurs (1500), les commutateurs (1500) étant de préférence disposés en-dessous de la limite entre les moitiés (P1, P2) de la matrice (200) ;
chaque commutateur (1500) comprend une première entrée (1501) connectée à l'une des deuxièmes lignes conductrices (Vx) de la première moitié (P1), une deuxième entrée (1502) connectée à une deuxième ligne conductrice correspondante (Vx) de la deuxième moitié (P2), et une sortie (1503) configurée pour être reliée sélectivement à l'une desdites entrées (1501, 1502) ;
les pixels (1) de la matrice (200) sont disposés en colonne parallèlement aux deuxièmes lignes conductrices (Vx) ;
chaque commutateur (1500) connecté aux deuxièmes lignes conductrices (Vx) d'une colonne impaire a sa sortie (1503) connectée à un premier circuit de lecture (READOUT4) ;
chaque commutateur (1500) connecté aux deuxièmes lignes conductrices (Vx) d'une colonne paire a sa sortie (1503) connectée à un deuxième circuit de lecture (READOUT5) ; et
les premier et deuxième circuits de lecture (READOUT4, READOUT5) appartenant de préférence au même substrat que les commutateurs (1500).

15. Capteur selon la revendication 13 ou 14, comprenant un circuit de commande (CTRL1") pour commander les commutateurs (1500) de sorte que la sortie (1503) de chaque commutateur soit reliée à la première entrée (1501) dudit commutateur pendant une lecture de pixels (1) de la première moitié (P1) de la matrice (200), et à la deuxième entrée (1502) dudit commutateur (1500) pendant une lecture de pixels (1) de la deuxième moitié (P2) de la matrice (200).
